# EUROPEAN PATENT SPECIFICATION

(11) **EP 1 513 093 B1**
(45) Date of publication and mention of the grant of the patent: **21.10.2009**
(21) Application number: 04020254.1
(22) Date of filing: 26.08.2004
(51) Int. Cl.: G06K 7/00, G06K 13/06, G06K 13/067

(54) **IC card processing apparatus**
IC-Karten Vorrichtung
Dispositif pour cartes à puce

(30) Priority: 27.08.2003 JP 2003209158
(43) Date of publication of application: 09.03.2005
(73) Proprietor: Hitachi-Omron Terminal Solutions, Corp., Tokyo (JP)
(72) Inventor: Tadamasa, Akihiro, Omron Corporation, Shiokoji-dori Kyoto-shi Kyoto 600-8530 (JP)
(74) Representative: Käck, Jürgen

(56) References cited:
- EP-A- 1 318 487
- EP-A2- 0 712 087
- FR-A- 2 810 763
- JP-A- 63 015 384

## Description

### BACKGROUND OF THE INVENTION

### 1. Field of the Invention

The present invention relates to an IC card processing apparatus for processing the information on an IC card having an IC chip.

### 2. Description of Related Art

In the IC card processing apparatus, there is a dedicated type IC card reader for processing the information only for a contact type IC card, for example. There is another composite type IC card reader for processing the information on many kinds of cards, that is, for reading the information individually from both a contact type IC card and a noncontact type IC card or for reading the information individually from both an IC card and a magnetic card. There is still another composite type IC card reader for reading the information of an IC chip and the information of a magnetic stripe from a hybrid IC card which records the information in both the IC chip and the magnetic stripe.

In the IC card reader of the prior art described above, a card is discriminated as the contact type IC card when the information is read by an IC contact brought into contact with the surface of that card, and a card is discriminated as the magnetic card when the information is read by a magnetic head. If the card is thus discriminated by reading the information in those manners, the IC contact is driven, too, at the insertion time of a card or extraneous object other than the IC card, and communications are performed for the contact with those surfaces. This discrimination has raised problems that the lifetimes of the IC contact and a circuit for driving the contact are shortened, and that the IC contact is worn out. In order to solve these problems, therefore, there have been described in the following Patent Documents 1 to 8 techniques for discriminating whether or not the inserted card or the like is the IC card, without reading the information, and relative techniques.

In Patent Document 1, it is detected by an IC card recognizing sensor made of a metal detection sensor disposed at an insert slot whether or not an inserted card has an IC having a metal such as lead wires or external terminals. Here in this Document, no specific configuration is described on the metal detection sensor. In Patent Document 2, whether or not the card has an IC chip is detected in terms of a variation in electrostatic capacity between capacitor electrode plates disposed in a card passage when the card is passed between the capacitor electrodes. In Patent Document 3, whether or not an IC is present at a proper position of an inserted card is detected if the oscillation of a blocking oscillator is stopped by the electromagnetic coupling between the detection coil of the blocking oscillator disposed at a preset distance from the card passage and the metal IC contact of the card. By this method, it is possible to discriminate whether or not the card is the contact type IC card but impossible to discriminate whether or not the card is the noncontact type IC card. In Patent Document 4, when an electric power is fed to the noncontact IC card by an electromagnetic induction, a weak electric wave emitted by the IC chip of the card is detected by a search coil so that the surface and back of the noncontact type IC card is discriminated on the basis of the electric field intensity of the weak electric wave detected. By this method, it is possible to discriminate whether or not the card is the noncontact type IC card but impossible to discriminate whether or not the card is the contact type IC card.

In Patent Document 5, whether or not the card has gold IC terminals is detected from the output level of a light receiving element having received the reflected light of an optical beam emitted from a light emitting element to the card, and whether or not the card has an IC unit is detected by processing the resonant output of an LC resonance circuit or by acquiring the image of the card by a CCD sensor array. By these methods, it is possible to discriminate whether or not the card is the contact IC card but not whether or not the card is the noncontact type IC card. By the method using the light or image, moreover, even the contact type IC card cannot be discriminated when the card is soiled changed in color. In Patent Document 5, moreover, whether or not the card is provided with an IC unit having a metal is detected by generating a magnetic field in the card passage to detect the magnetic reaction from the card with an MR sensor. In Patent Document 6, the number or kind of cards inserted is discriminated by generating a magnetic field with a magnet in a card passage so that the variation in the magnetic field according to the thickness of a magnetic card is detected in terms of an output voltage from a Hall element. In this method, the IC card is handled with little influence on the magnetic field. Therefore, the card, which could not be discriminated as the magnetic card, is just discriminated as the IC card. Therefore, it is substantially impossible to discriminate whether or not the card is the IC card. Patent Document 7 also discriminates the number and kind of the inserted cards like Patent Document 6.

Patent Document 8 discloses a device that accepts coin-like RFID objects. A shutter is opened to allow entering of the coin only if said coin is considered to be allowed. The allowability is determined using electromagnetic reading of the RFID coin.
[Patent Document 1] JP-A-6-266910
[Patent Document 2] JP-A-64-37687
[Patent Document 3] JP-A-10-21353
[Patent Document 4] JP-A-2000-306047
[Patent Document 5] JP-A-2001-101357
[Patent Document 6] Japanese Patent No. 2753672
[Patent Document 7] JP-A-8-30736
[Patent Document 8] FR-A-2 810 763

EP 0 712 087 discloses an IC card reader according to the preamble of claim 1.

### SUMMARY OF THE INVENTION

The invention is defined in claim 1. Particular embodiments of the invention are set out in the dependent claims.

An object of the invention is to provide an IC card processing apparatus capable of discriminating whether or not an inserted object is an IC card.

According to the invention, there is provided an IC card processing apparatus comprising read means for reading the information which is recorded in an IC card inserted from an insert slot, comprising: magnetic field generating means for generating a magnetic field at a position to confront the card inserted from the insert slot; and a Hall element for outputting a voltage according to the magnetic field of the magnetic field generating means. When an object is inserted from the insert slot, the presence/absence of an IC chip and/or an IC contact is detected on the basis of a variation in the output voltage of the Hall element.

With the configuration described above, the magnetic material of a metal or the like is contained in the IC chip or the IC contact belonging to the noncontact or contact type IC card. In case the IC card is inserted from the insert slot, therefore, the magnetic field generated by the magnetic field generating means is disturbed by the IC chip or the IC contact, and the output voltage of the Hall element becomes lower than that before the insertion so that the presence of the IC chip or the IC contact can be detected. Here, the magnetic material for causing the aforementioned disturbance in the magnetic field is exemplified by a ferromagnetic material such as iron or nickel or by a weak magnetic material such as aluminum, platinum, copper or gold. In case a card or extraneous object other than the IC card is inserted from the insert slot, the magnetic field generated by the magnetic field generating means is not disturbed so much as that at the insertion time of the IC card. The output voltage of the Hall element does not vary so that the absence of the IC chip or the IC contact can be detected. Therefore, the presence of the IC chip or the IC contact can be detected, as above, to discriminate that the inserted object is the IC card. Moreover, the absence of the IC chip or the IC contact can be detected to discriminate that the inserted object is not the IC card.

In an embodiment of the invention, moreover, the read means reads the information on the IC card in response to the detection of the IC chip and/or the IC contact of the IC card. Thus, the read means is not unnecessarily driven at the insertion time of a card other than the IC card so that the lifetime of the read means is not shortened unlike the prior art.

In an embodiment of the invention, moreover, the Hall element is disposed at a position to confront one of the surface and the back of the card inserted from the insert slot whereas the magnetic field generating means is disposed at a position to confront the other. When the IC card is inserted from the insert slot, therefore, the number of magnetic fluxes of the magnetic field generating means to be shielded by the IC chip or the IC contact is increased to vary the voltage such that the output voltage of the Hall element is far lower than that at the time when the IC card is not inserted. This makes it possible to detect the presence/absence of the IC chip or the IC contact. Moreover, the presence/absence of the IC chip or the IC contact can be detected according to the variation in the frequency or phase in addition to the variation in the voltage.

In another embodiment of the invention, moreover, the insert slot is formed in an insert unit made of a material having no magnetic property, and the magnetic field generating means is so disposed at a position to confront the card inserted from the insert slot as to interpose the material having no magnetic property. Thus, the magnetic field generating means is kept out of contact with the card inserted from the insert slot so that the magnetic field generating means is neither damaged nor soiled with dirt or the like. If the Hall element is also so disposed at a position to confront the card inserted from the insert slot as to interpose the material having no magnetic property, the Hall element is also kept out of contact with the card inserted from the insert slot so that the Hall element is neither damaged nor soiled with dirt or the like.

In another embodiment of the invention, moreover, the magnetic field generating means is disposed at such a position that the generated magnetic field may exert no influence on a magnetic head for reading the information recorded in the magnetic stripe of a magnetic card. Thus, the magnetic head can be prevented from being erroneously operated by the magnetic field generated by the magnetic field generating means.

In another embodiment of the invention, moreover, the period for the magnetic field of the magnetic field generating means to vary is made shorter than the reading period of the magnetic head for reading the information recorded in the magnetic stripe of the magnetic card. In case the magnetic field generating means is made of the electromagnet, the intensity of the magnetic field generated varies for a preset period. In the aforementioned configuration, however, the magnetic head can be prevented from being erroneously operated by the magnetic field of the magnetic field generating means so that the information can be precisely read from the magnetic stripe of the magnetic card.

In another embodiment of the invention, moreover, width detecting means is further comprised for detecting whether or not an object of a preset width has been inserted into the insert slot, and the magnetic field generating means and the Hall element are activated responsively as the width detecting means detects the insertion of an object of a preset width. Before the card is inserted from the insert slot, therefore, the magnetic field generating electric current is not fed to the magnetic field generating means, and the voltage outputting electric current is not fed to the Hall element, so that the power consumption can be suppressed to a low level.

In another embodiment of the invention, moreover, the magnetic field generating means is constructed of an antenna for generating a magnetic field to communicate with a noncontact type IC card in a noncontact manner. Thus, the presence/absence of the IC chip or the IC contact of the IC card can be detected with the antenna and the Hall element without providing the electromagnet or the magnet as the magnetic field generating means. After the IC card was discriminated by detecting the presence of the IC chip or the IC contact in the inserted card, moreover, whether the IC card is of the noncontact type or the contact type can be discriminated by detecting it with the antenna whether or not the IC card has the noncontact IC chip.

In another embodiment of the invention, moreover, the magnetic field generating means is made of a magnet for generating a magnetic field having no time variation. Thus, the presence/absence of the IC chip or the IC contact in the IC card can be detected with the magnet and the Hall element. Moreover, the magnetic field of the magnet is a standing one so that the magnetic head is not erroneously operated by the magnetic field of the magnet even if the magnetic head and the magnet are disposed close to each other.

In another embodiment of the invention, moreover, there is provided an IC card processing apparatus comprising: an insert slot; read means for reading the information which is recorded in an IC card inserted from the insert slot; and a shutter interposed between the insert slot and the read means. Detection means is disposed at the insert slot for detecting the presence/absence of an IC chip and/or an IC contact of the IC card on the basis of a variation in a magnetic field. Moreover, the shutter is opened on the basis of the fact that the detection means has detected the IC chip and/or the IC contact. Thus, the detection means detects the presence/absence of the IC card when the object is inserted into the insert slot. As a result, the shutter is opened when the detection means detects the IC card, but otherwise the shutter is not opened. This makes it possible to prevent an extraneous object other than the IC card from being inserted into the body of the IC card processing apparatus.

### BRIEF DESCRIPTION OF THE DRAWINGS

Fig. 1 shows a schematic configuration diagram of an IC card reader of a first embodiment.
Fig. 2 shows a schematic configuration diagram of the IC card reader of the first embodiment.
Fig. 3 shows a schematic configuration diagram of the IC card reader of the first embodiment.
Fig. 4 shows a block diagram of the first embodiment.
Fig. 5 shows diagrams for explaining a Hall element and an electromagnet of the first embodiment.
Fig. 6 shows diagrams for explaining the Hall element and the electromagnet of the first embodiment.
Fig. 7 shows a flow chart of the first embodiment.
Fig. 8 shows a schematic configuration diagram of an IC card reader of a second embodiment.
Fig. 9 shows a schematic configuration diagram of the IC card reader of the second embodiment.
Fig. 10 shows a schematic configuration diagram of the IC card reader of the second embodiment.
Fig. 11 shows a block diagram of the second embodiment.
Fig. 12 shows changing diagrams of the information of a magnetic head and the magnetic field of an electromagnet of the second embodiment.
Fig. 13 shows a flow chart of the second embodiment.
Fig. 14 shows a schematic configuration diagram of an IC card reader of a third embodiment.
Fig. 15 shows a block diagram of the third embodiment.
Fig. 16 shows diagrams for explaining a Hall element and a magnet of the third embodiment.
Fig. 17 shows diagrams for explaining the Hall element and the magnet of the third embodiment.
Fig. 18 shows a schematic configuration diagram of an IC card reader of a fourth embodiment.
Fig. 19 shows a block diagram of the fourth embodiment.
Fig. 20 shows a flow chart of the fourth embodiment.
Fig. 21 shows diagrams showing another embodiment.

### DESCRIPTION OF PREFERRED EMBODIMENTS

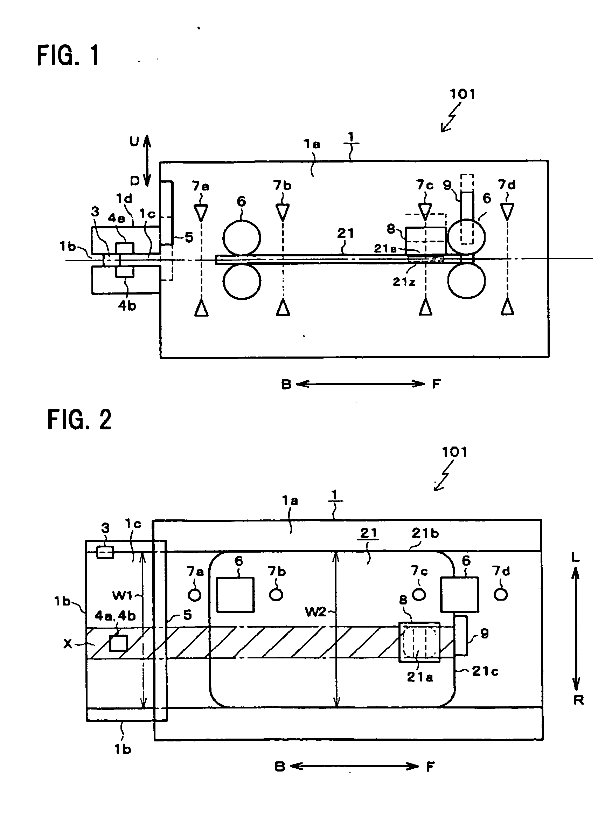

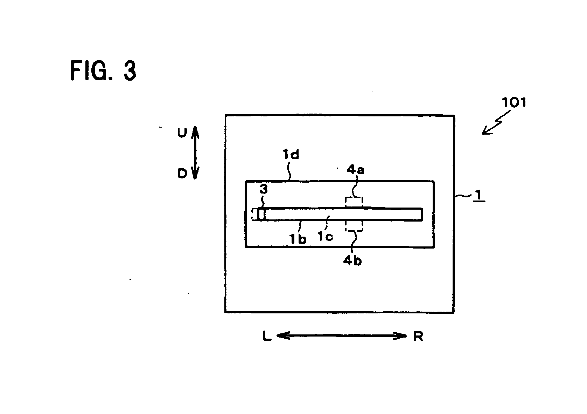

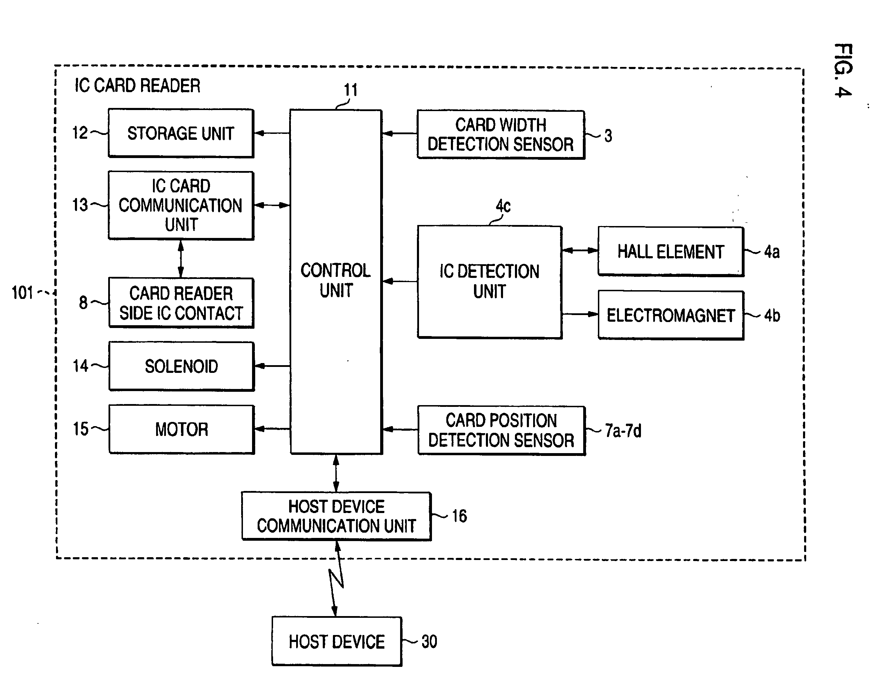

Fig. 1 to Fig. 7 show a first embodiment of the invention. First of all, a schematic structure of an IC card reader as one example of an IC card processing device according to this embodiment will be described with reference to Fig. 1 to Fig. 3. Here: Fig. 1 is a sectional view of the IC card reader; Fig. 2 is a top plan view of the same; and Fig. 3 is a front elevation of the same. In Fig. 1, reference numeral 101 designates an IC card reader dedicated for a contact type IC card. This IC card reader 101 is mounted on and connected with a host apparatus 30 (as shown in Fig. 4) such as an automatic cash dispensing apparatus. Numeral 1 designates the body of the IC card reader 101, and numeral 1a designates the internal space (as will be called the "body inside") of the body 1. Numeral 21 designates a contact type IC card having an IC chip 21z buried for recording information therein. The information from the IC chip 21z is read through an IC contact 21a mounted at a preset position of the surface of the IC card 21. The IC contact 21a is formed of a copper pattern plated with nickel and gold. On the other hand, the IC chip 21z is made to contain a copper pattern, an aluminum pattern or the like. Numeral 1d designates an insert unit, which is formed to protrude from the body 1 and made of a material having no magnetic property such as a synthetic resin. Numeral 1b designates an insert slot formed in the insert unit 1d for inserting the IC card 21. The insert slot 1b constitutes one embodiment of an insert slot in the invention, and the insert unit 1d constitutes one embodiment of an insert unit in the invention. Numeral 1c designates a passage leading for the IC card 21 from the insert slot 16 to the body inside 1a. As shown in Fig. 2, the width W1 of the passage 1c is formed so slightly larger than the width W2 of the IC card 21 that the IC card 21 may be able to move in directions F and B without any inclination.

Numeral 5 designates a shutter, which is disposed in the passage 1c and opened/closed by a solenoid in upward and downward directions U and D (of Fig. 1). This shutter 5 regulates either the access of the IC card 21 from the insert slot 1b to the body inside 1a or the ejection from the body inside 1a to the insert slot 1b. In Fig. 1, the state of the shutter 5 being opened is indicated by solid lines, and the state of the shutter 5 being closed is indicated by broken lines. Numeral 3 designates a card width detection sensor, which is constructed of a photo interrupter. The card width detection sensor 3 is disposed in the vicinity of the insert slot 16 on the side of the passage 1c in an L direction, as shown in Fig. 2 and Fig. 3. This sensor 3 detects it on the side closer to the insert slot 1b than the shutter 5 whether or not an object having a width substantially equal to the card width W2 has been inserted. When the IC card 21 is inserted from the insert slot 1b, for example, the sensor 3 detects the L-direction side end portion 21b of the IC card 21 advancing in the F-direction along the passage 1c so that it is switched from an OFF state to an ON state to output the switching signal to a control unit 11 (as shown in Fig. 4). When an object having a smaller width than the card width W2 is inserted from the insert slot 1b, on the other hand, the sensor 3 is kept in the OFF state without detecting that object. The card width detection sensor 3 constitutes one embodiment of width detecting means in the invention.

Numeral 4b designates an electromagnet for generating a magnetic field in the passage 1c near the insert slot 1b, and numeral 4a designates a Hall element for outputting a voltage according to the magnetic field of the electromagnet 4b. The Hall element 4a and the electromagnet 4b are so arranged that they are divided on the upper side (i.e., on the U-direction side) and on the lower side (i.e., on the D-direction side) and are juxtaposed to each other vertically with respect to the passage 1c, as shown in Fig. 1 and Fig. 3. Here, the lower face of the Hall element 4a and the upper face of the electromagnet 4b are individually exposed to the passage 1c. Moreover, the Hall element 4a and the electromagnet 4b are arranged within a range X, through which the IC contact 21a of the IC card 21 is to pass through, as shown in Fig. 2. Here, the IC chip 21z in the IC card 21 is also disposed just below the IC contact 21a so that it passes through the range X like the IC contact 21a. In other words, the Hall element 4a is disposed to confront the IC contact 21a of the surface (i.e., the face having the IC contact 21a) of the IC card 21 inserted in a normal position from the insert slot 1b, and the electromagnet 4b is disposed just below the Hall element 4a and at a position to confront the back (i.e., the face not having the IC contact 21a) of the IC card 21. Here, the normal position is the state, in which the IC card 21 is positioned to have its surface directed upward with the IC contact 21a and its end portion 21c closer to the IC contact 21a directed forward in the inserted direction F. The Hall element 4a constitutes one embodiment of a Hall element in the invention, and the electromagnet 4b constitutes one embodiment of magnetic field generating means in the invention.

Numeral 6 appearing in Fig. 1 designates a pair of upper and lower rollers to be turned by a motor 15 (as shown in Fig. 4). The IC card 21 is conveyed in the F-direction, as the motor 15 rotates forward, and in the B-direction as the motor 15 rotates backward. Here, the rollers 6 on the F-direction side are used for recovering the IC card 21 in the recovery box (although not shown) of the host device 30 disposed on the F-direction side of the IC card reader 101 or for conveying a nonconforming card long in the F- and B-directions. Numerals 7a to 7f designate card position detection sensors composed of photo microsensors. These sensors 7a to 7d detect that the IC card 21 has been conveyed to the preset position of the body inside 1a. Here, the sensors 7a to 7d take the OFF state, when they do not detect the IC card 21, and the ON state when they detect the IC card 21.

Numeral 8 designates such an IC contact on the side of the card reader 101 as is moved in the upward and downward directions U and D by a solenoid. When the IC card 21 is conveyed into the body inside 1a by the rollers 6 so that it is stopped, as shown in Fig. 1, that IC contact 8 is brought, from the position indicated by broken lines to the position indicated by solid lines, into contact with the IC contact 21a on the side of the IC card 21 so that it may read the information from the IC chip 21z in the IC card 21. Here, the IC contact 8 may also be fixed, without being moved by the solenoid, at the position indicated by the solid lines. Numeral 9 designates a stopper to be moved in the upward and downward directions U and D by the solenoid. This stopper 9 always resides at a position indicated by solid lines, thereby to stop the IC card 21 conveyed by the rollers 6, at a position in which the IC contact 8 and the IC contact 21a can contact with each other. Moreover, the stopper 9 moves to a position, as indicated by broken lines, to pass the IC card 21 conveyed in the F-direction by the rollers 6, when the IC card 21 is to be recovered in the recovery box of the host device 30, as described hereinbefore.

Fig. 4 is a block diagram showing an electric configuration of the aforementioned IC card reader 101. In Fig. 4, numeral 11 designates a control unit for controlling the individual units of the IC card reader 101. The control unit 11 is configured to include a CPU, a ROM, a RAM and control circuits, as will be described hereinafter. Here, the ROM is stored with action programs or the like for the CPU, and the RAM is stored in readable/writable manners with control data for the CPU to control the individual units. Numeral 12 designates a storage unit composed of a RAM, a nonvolatile memory and so on. Numeral 13 designates an IC card communication unit, which is composed of a communication circuit for communications with the IC chip 21z of the IC card 21 through the aforementioned IC contact 8. The control unit 11 is caused by the communication unit 13 to energize the IC contact 21a of the IC card 21 from the IC contact 8 and to read the information from the IC chip 21z of the IC card 21. The IC contact 8 and the IC card communication unit 13 constitute one embodiment of read means in the invention. Numeral 14 designates a plurality of solenoids for moving the aforementioned shutter 5, IC contact 8 and stopper 9 individually. The control unit 11 is provided with control circuits for controlling the drives of the individual solenoids 14 so that the individual solenoids 14 may be driven by the individual circuits thereby to open/close the shutter 5 and to move the IC contact 8 and the stopper 9. The numeral 15 designates the motor for turning the aforementioned rollers 6. The control unit 11 is provided with a control circuit for controlling the drive of the motor 15 so that the motor 15 may be driven forward or backward by that circuit to turn the rollers 6 thereby to convey the IC card 21 at a preset speed to the preset position of the body inside 1a.

The numeral 3 designates the aforementioned card width detection sensor; the numeral 4a designates the aforementioned Hall element; the numeral 4b designates the aforementioned electromagnet; and numeral 4c designates an IC detection unit including circuits for activating the Hall element 4a and the electromagnet 4b individually. This IC detection unit 4c feeds the electromagnet 4b with an electric current to generate a magnetic field, and the Hall element 4a with an electric signal to generate a voltage according to the magnetic field of the electromagnet 4b. The numerals 7a to 7d designate the aforementioned card position detection sensors. Numeral 16 designates a host device communication unit which is composed of a communication circuit for mutual communications with the host device 30. The control unit 11 is caused by that communication unit 16 to transmit the information read from the IC card 21 to the host device 30.

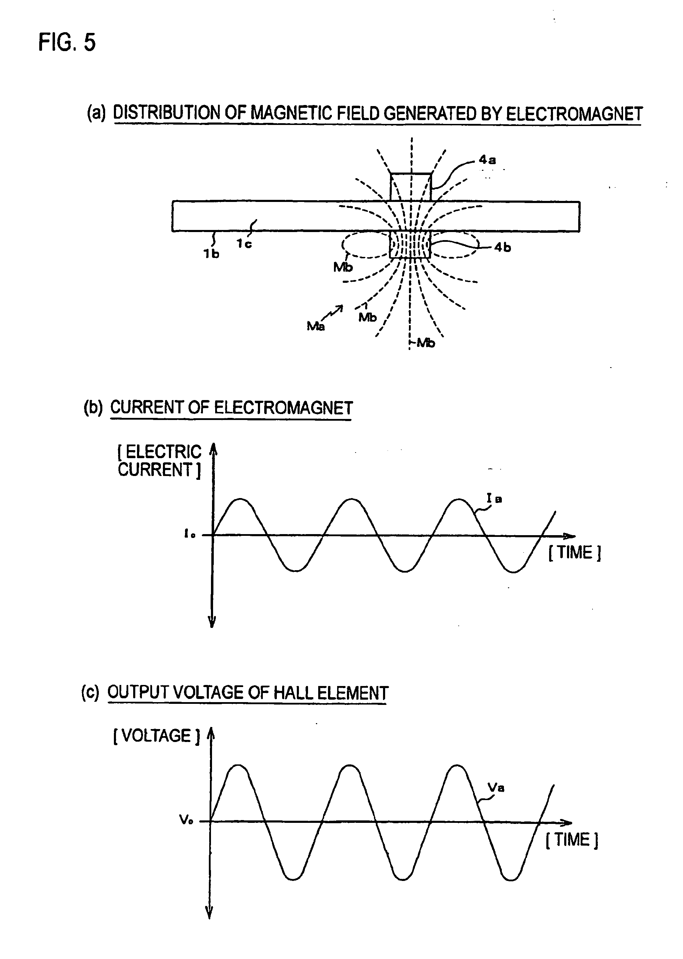

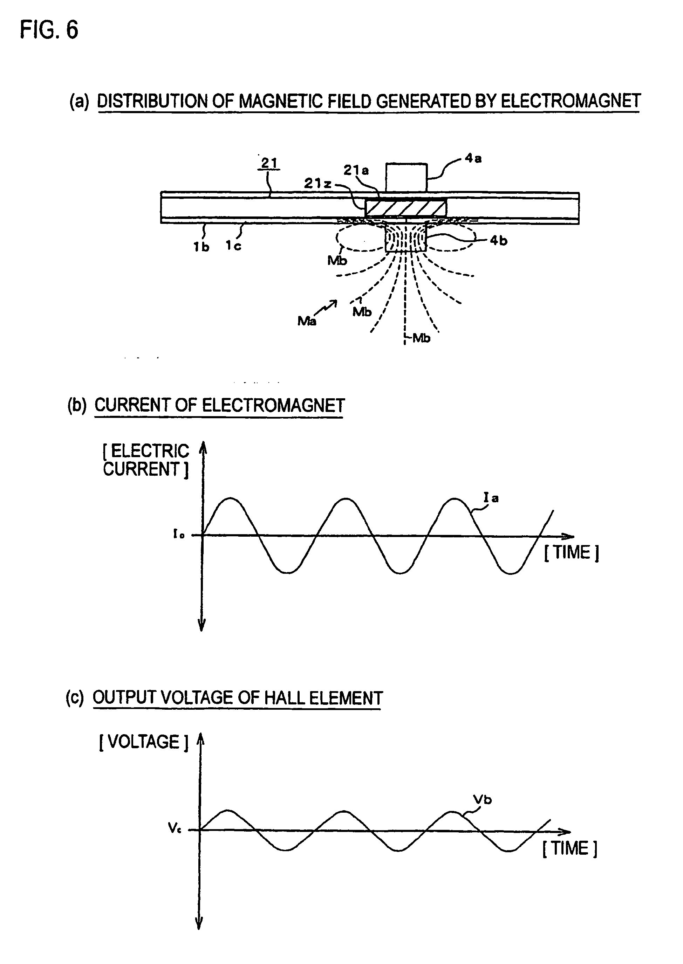

Figs. 5 and 6 are diagrams for explaining the actions of the aforementioned Hall element 4a and electromagnet 4b. In Fig. 5, the aforementioned IC detection unit 4c always feeds the electromagnet 4b with an electric current Ia, the magnitude of which varies for a preset period, as shown in Fig. 5(b). (Letters I₀ indicate an arbitrary bias current value.) As a result, the electromagnet 4b generates a magnetic field Ma therearound, as shown in Fig. 5(a). (Letters Mb designate a magnetic flux.) Moreover, the IC detection unit 4c always feeds the Hall element 4a with an electric current at a preset value. As a result, the Hall element 4a outputs such a voltage Va to the IC detection unit 4c that its magnitude varies for a preset period, as shown in Fig. 5(c), according to the magnetic field Ma generated by the electromagnet 4b. (Letters V₀ designate an arbitrary bias voltage value. ) The reason why the output voltage Va of the Hall element 4a thus varies is that the IC detection unit 4c feeds the electromagnet 4b with the electric current Ia varying for the preset period so that the intensity of the magnetic field Ma of the electromagnet 4b varies for a preset period.

When the IC card 21 is inserted in the normal position from the insert slot 16 into the passage 1c while the magnetic field Ma being generated by the electromagnet 4b, as described above, the magnetic flux Mb of the electromagnet 4b is shielded by the IC chip 21z so that the magnetic field Ma is disturbed, as shown in Fig. 6 (a), because the IC card 21 is provided with the IC chip 21z and the IC contact 21a which contain a magnetic material such as a metal. In case the IC chip 21z is not arranged just below the IC contact 21a, for example, the magnetic flux Mb of the electromagnet 4b is shielded by the IC contact 21a so that the magnetic field Ma is disturbed. Even in case the magnetic flux Mb is hardly shielded by the IC chip 21z by raising the intensity of the magnetic field Ma generated by the electromagnet 4b, moreover, the magnetic flux Mb of the electromagnet 4b is also shielded by the IC contact 21a, which is almost made of a metal ( i. e. , a copper pattern) and so exposed to the outside as to confront the Hall element 4a, so that the magnetic field Ma is disturbed. When the magnetic field Ma of the electromagnet 4b is disturbed, as described above, the Hall element 4a outputs such a voltage Vb to the IC detection unit 4c as has a lower level, as shown in Fig. 6(c), than that of the output voltage Va before the insertion of the IC card 21. As the output voltage of the Hall element 4a thus becomes lower, the IC detection unit 4c detects the presence of the IC chip 21z or the IC contact 21a, and outputs an IC detection signal indicating that detection result to the aforementioned control unit 11.

In case a card having neither the IC chip nor the IC contact unlike the IC card 21 is inserted from the insert slot 1b into the passage 1c, on the other hand, the magnetic flux Mb of the electromagnet 4b is less shielded than that of the insertion time of the IC card 21 so that the magnetic field Ma is less disturbed. Therefore, the output voltage of the Hall element 4a does not vary so much as the voltage Vb of Fig. 6(c) so that it hardly varies fromthe output voltage Va, as shown in Fig. 5(c), before the insertion of the IC card 21. In case the output voltage of the Hall element 4a thus hardly varies so much as the voltage at the insertion time of the IC card 21, the IC detection unit 4c detects the absence of the IC chip 21z or the IC contact 21a so that it does not output the aforementioned IC detection signal to the control unit 11.

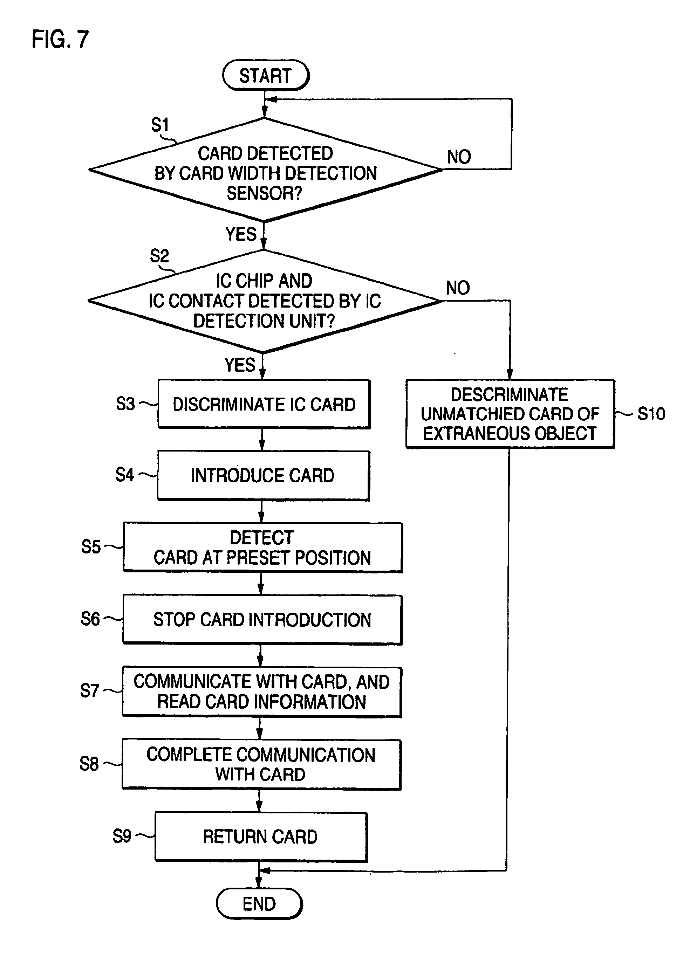

Fig. 7 is a flow chart showing an operation routine of the aforementioned IC card reader 101. The individual operations are executed by the control unit 11 (specifically, by the CPU belonging to the control unit 11). When an object having the card width W2 (Fig. 2) is inserted from the insert slot 1b into the passage 1c, as shown in Fig. 7, the card width detection sensor 3 detects that object so that it is switched from the OFF state to the ON state thereby to output the signal to the control unit 11. As a result, the control unit 11 decides that the card width detection sensor 3 has detected the insertion of the card ( i.e. , the object having the card width W2 ) ( Step S1 : YES) . On the other hand, the IC detection unit 4c always feeds the electromagnet 4b with the magnetic field generating current and the Hall element 4a with the voltage outputting current. If the inserted object is the IC card 21, therefore, the magnetic field Ma of the electromagnet 4b is disturbed by the IC chip 21z or the IC contact 21a, as described above, thereby to lower the level of the output voltage of the Hall element 4a. Therefore, the IC detection unit 4c detects the presence of the IC chip 21z or the IC contact 21a, and outputs the aforementioned IC detection signal to the control unit 11. As a result, the control unit 11 decides that the IC detection unit 4c has detected the IC chip 21 z or the IC contact 21a (Step S2: YES), and discriminates (at Step S3) that the inserted object is the IC card 21.

With this discrimination, the control unit 11 opens the shutter 5 (Fig. 1) and starts the forward drive of the motor 15 (Fig. 4) so that it conveys the inserted IC card 21 with the rollers 6 and introduces the card 21 into the body inside 1a (at Step S4). When the card position detection sensor 7a (Fig. 1) does not detect the IC card 21 so that it takes the OFF state and when the card position detection sensors 7b and 7c (Fig. 1) detect the IC card 21 so that they take the ON state, the control unit 11 decides (at Step S5) that the IC card 21 has been detected at a preset position. When a preset time period then elapses, the control unit 11 stops the drive of the motor 15 thereby to stop the introduction of the IC card 21 (at Step S6). At this time, the IC card 21 stops at such a position that the IC contact 8 on the side of the card reader 101 can contact with the IC contact 21a, as shown in Fig. 1. The control unit 11 brings the IC contact 8, when it stops the introduction of the IC card 21, into contact with the IC contact 21a on the side of the IC card 21 so that it causes the communication unit 13 (Fig. 4) to communicate with the IC card 21 thereby to read the information from the IC chip 21z (at Step S7). Then, the control unit 11 sends the read information to the host device 30 by the communication unit 16. When the control unit 11 receives such a notice from the host device 30 as indicates that the read information has been processed, it completes the communication with the IC card 21 (at Step S8). Subsequently, the control unit 11 brings the IC contact 8 out of contact with the IC contact 21a, and then starts the backward drive of the motor 15 so that it conveys the IC card 21 by the rollers 6 and returns the card 21 to the insert slot 1b (at Step S9). When the IC card 21 is returned to the insert slot 1b, the card width detection sensor 3 detects the IC card 21 and takes the ON state. When the IC card 21 is then extracted from the insert slot 1b, the card width detection sensor 3 takes the OFF state. Therefore, the control unit 11 closes the shutter 5 and stops the drive of the motor 15 thereby to end the routine.

In case an extraneous object having a smaller width than the card width W2 is inserted from the insert slot 1b into the passage 1c, on the other hand, the card width detection sensor 3 neither detects that insertion nor outputs the switching signal from the OFF state to the ON state, to the control unit 11. Therefore, the card width detection sensor 3 does not detect the insertion of the card (Step S1: NO) so that the control unit 11 stands by until the switching signal is outputted from the card width detection sensor 3. In case such a card or extraneous object other than the IC card 21 as has the card width W2 is inserted, moreover, the card width detection sensor 3 outputs the switching signal from the OFF state to the ON state, as described above. Therefore, the control unit 11 decides that the card width detection sensor 3 has detected the insertion of the card (Step S1: YES). However, the magnetic field Ma of the electromagnet 4b is not disturbed so much as that at the insertion time of the IC card 21 so that the level of the output voltage of the Hall element 4a does not vary. Therefore, the IC detection unit 4c detects the absence of the IC chip 21z or the IC contact 21a so that it does not output the aforementioned IC detection signal to the control unit 11. As a result, the control unit 11 decides that the IC detection unit 4c has not detected the IC chip 21z or the IC contact 21a (Step S2: NO), but discriminates (at Step S10) that the inserted object is the unmatched card or the extraneous object other than the IC card 21, and ends the routine without opening the shutter 5.

In the first embodiment thus far described, in case the IC card 21 is inserted from the insert slot 1b, the magnetic field Ma generated by the electromagnet 4b is disturbed by the IC chip 21z or the IC contact 21a containing the magnetic material, so that the output voltage of the Hall element 4a becomes lower than that before the insertion. As a result, the presence of the IC chip 21z or the IC contact 21a can be detected by the IC detection unit 4c. In case a card or extraneous object other than the IC card 21 is inserted, on the other hand, the magnetic field Ma generated by the electromagnet 4b is not disturbed so such as that at the insertion time of the IC card 21 so that the output voltage of the Hall element 4a does not vary. As a result, the absence of the IC chip 21z or the IC contact 21a can be detected by the IC detection unit 4c. Since the presence of the IC chip 21z or the IC contact 21a can be detected, as described above, it is possible to discriminate that the inserted object is the IC card 21. Since the absence of the IC chip 21z or the IC contact 21a can be detected, on the other hand, it is possible to discriminate that the inserted object is not the IC card 21.

In response to the detection of the presence of the IC chip 21z or the IC contact 21a by the IC detection unit 4c, moreover, the information reading operation is performed by the IC contact 8 and the communication unit 13. At the insertion time of the card or the extraneous object other than the IC card 21, therefore, it is unnecessary for contacting with the card or the extraneous object to move the IC contact 8, and it is also unnecessary for communicating with the same to move the communication unit 13. As a result, the lifetimes of the IC contact 8 and the communication unit 13 are not shortened unlike the prior art. Moreover, the Hall element 4a is disposed at the position to confront the surface of the IC card 21 inserted from the insert slot 1b, and the electromagnet 4 is disposed at the position to confront the back face of the same. When the IC card 21 is inserted from the insert slot 1b, the number of the magnetic flux Mb of the electromagnet 4 to be shielded by the IC chip 21z or the IC contact 21a increases so that the output voltage of the Hall element 4a becomes far lower than that at the time when the IC card 21 is not inserted. Thus, it is possible to detect whether or not the IC chip 21z or the IC contact 21a is present.

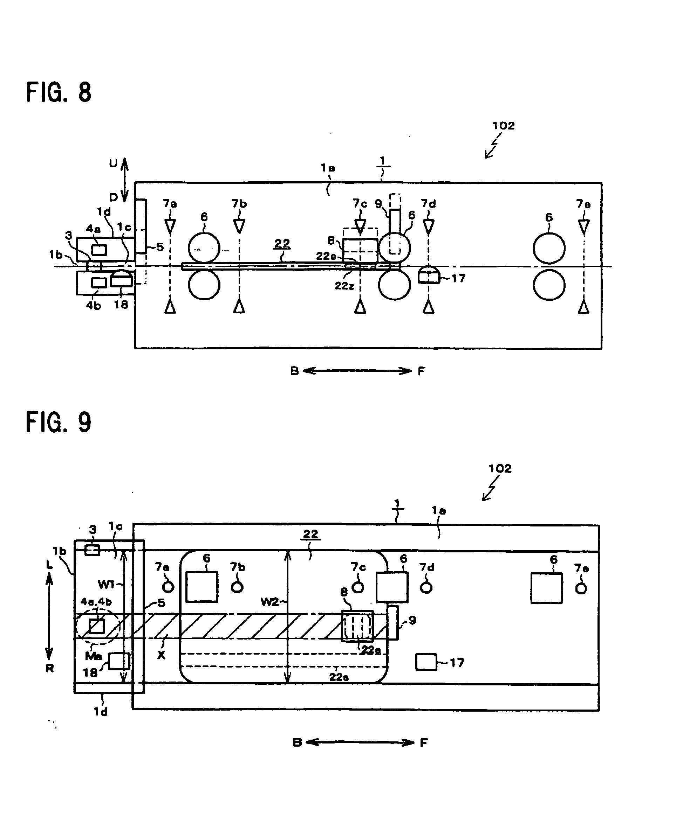

Fig. 8 to Fig. 13 are diagrams showing a second embodiment of the invention. Here in Fig. 8 to Fig. 11, the same portions as the aforementioned ones of Fig. 1 to Fig. 4 are designated by the common reference numerals. An IC card reader 102 according to this embodiment is a composite type IC card reader for processing the aforementioned contact type IC card 21 (as exemplified in Fig. 6 (a)) provided with the IC chip 21z and the IC contact 21a, a magnetic card (although not shown) having a magnetic stripe, and a hybrid IC card 22 provided with all an IC chip 22z (as shown in Fig. 8), an IC contact 22a (as shown in Fig. 8) and a magnetic stripe 22s (as shown in Fig. 9). Here, the IC chip 22z and the IC contact 22a of the IC card 22 contain a magnetic material such as a metal like the IC chip 21z and the IC contact 21a of the IC card. Numerals 17 and 18 shown in Fig. 8 designate magnetic heads for reading the magnetic information from the magnetic strip of the magnetic card or the hybrid IC card 22. The first magnetic head 17 reads the magnetic information from the magnetic stripe of the card, which is inserted from the insert slot 1b and conveyed in the F-direction in the body inside 1a by the rollers 6. On the contrary, the second magnetic head 18 disposed in the insert unit 1d reads the minimum information necessary for detecting it from the magnetic stripe of the card just inserted whether or not the card inserted from the insert slot 1b has the magnetic stripe. The first magnetic head 17 and the second magnetic head 18 constitute one embodiment of a magnetic head in the invention. Numeral 7e designates a card position detection sensor composed of a photo microsensor like the sensors 7a to 7d.

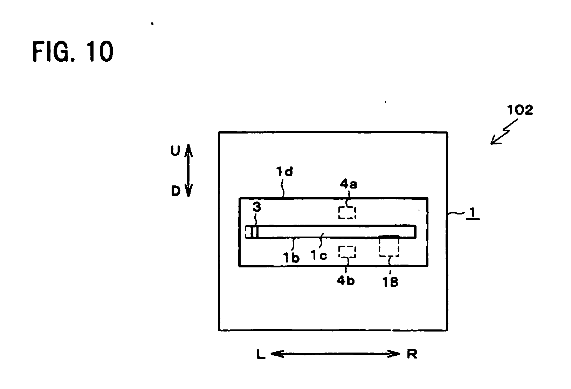

The Hall element 4a and the electromagnet 4b in the insert unit 1d are so arranged that they are divided on the upper side (i.e., on the U-direction side) and on the lower side (i.e., on the D-direction side) and are juxtaposed to each other vertically with respect to the passage 1c, as shown in Fig. 8 and Fig. 10. As a result, the Hall element 4a confronts the surface (i.e., the face having the IC contact 22a) of the IC card 22 inserted in the normal position from the insert slot 1b, and the electromagnet 4b confronts the back (i.e. , the face not having the IC contact 21a) of the IC card 22 just below the Hall element 4a. Moreover, each of the Hall element 4a and the electromagnet 4b is disposed at a position, in which the material having no magnetism such as a synthetic resin and constructing the insert unit 1d is interposed between itself and the passage 1c. As a result, the Hall element 4a and the electromagnet 4b confront the IC card 22 inserted from the insert slot 1b without being exposed to the passage 1c but with the nonmagnetic material being interposed. Moreover, the Hall element 4a and the electromagnet 4b are disposed within the range X, through which the IC contact 22a of the IC card 22 is to pass, as shown in Fig. 9, and at the positions, in which the magnetic heads 17 and 18 do not enter the magnetic field Ma generated by the electromagnet 4b. Here, the IC chip 22z in the IC card 22 is disposed just below the IC contact 22a so that they pass through the range X like the IC contact 22a, but the magnetic stripe 22s does not pass through the range X. As a result, the Hall element 4a confronts the IC contact 22a of the IC card 22 inserted from the insert slot 1b, but the electromagnet 4b exerts no influence on the magnetic heads 17 and 18 or the magnetic stripe 22s with the magnetic field Ma generated thereby.

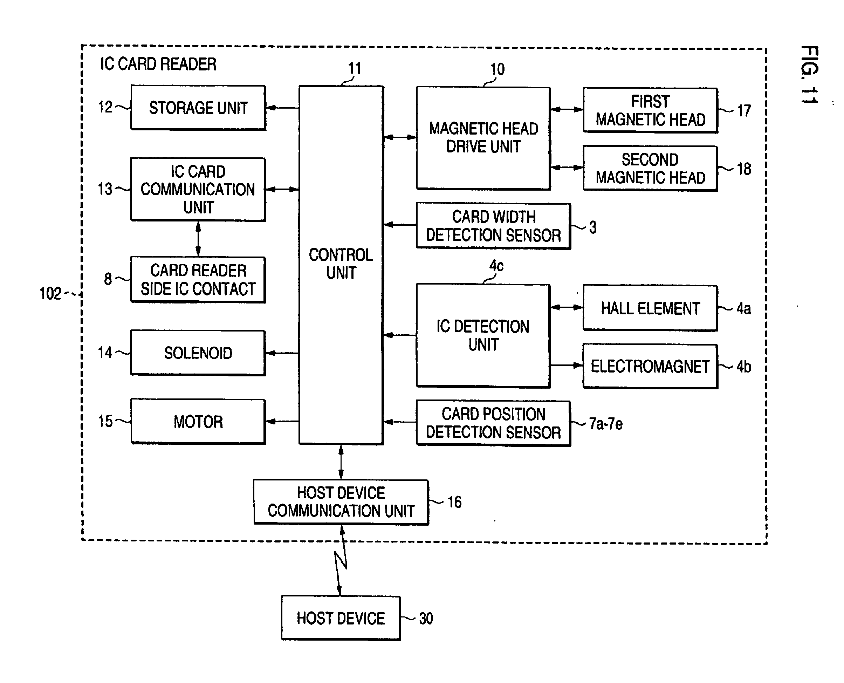

Fig. 11 is a block diagram showing an electric configuration of the aforementioned IC card reader 102. In Fig. 11, numeral 10 designates a magnetic head drive unit including circuits for individually driving the aforementioned magnetic heads 17 and 18. This drive unit 10 creates information from the variation, as detected by the individual magnetic heads 17 and 18, of the magnetic force of the magnetic stripe 22s when the information is read from the magnetic stripe 22s of the IC card 22, for example.

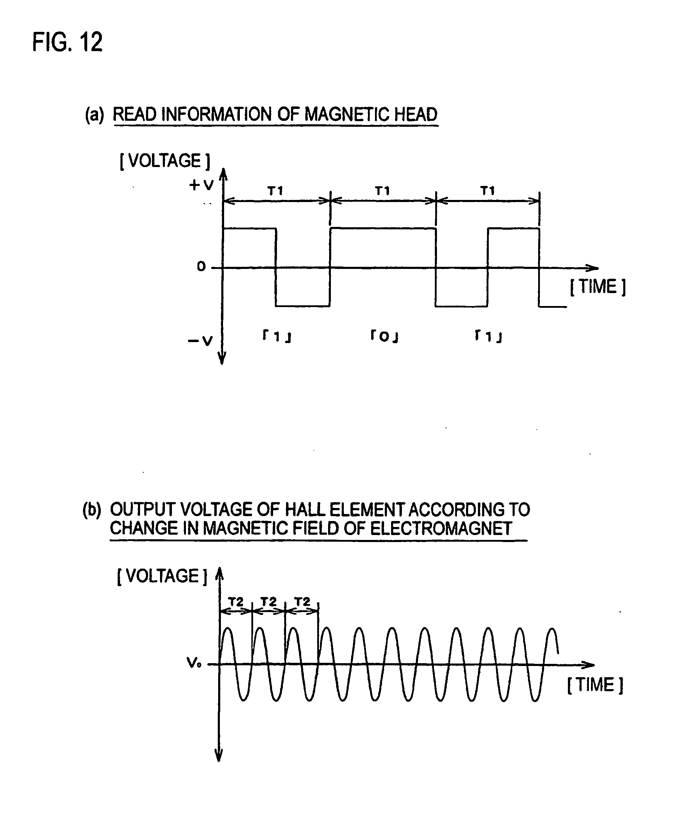

Fig. 12 presents diagrams showing variations in the read information of the magnetic heads 17 and 18 and in the magnetic field Ma of the electromagnet 4b. When the IC card 22 is either conveyed in the F-direction or B-direction (of Fig. 8) by the motor 15 and the rollers 6 or manually moved in the F-direction or B-direction (of Fig. 8) with the magnetic heads 17 and 18 being in contact with the magnetic stripe 22s of the hybrid IC card 22, for example, the magnetic information (i.e., the information "1" and "0") recorded in the magnetic stripe 22s is read by the magnetic heads 17 and 18, as shown in Fig. 12 (a). Letter T1 designates a period for reading the information of the magnetic stripe by the magnetic heads 17 and 18. If the electric current Ia shown in Fig. 5(b) is fed from the IC detection unit 4c to the electromagnet 4b, on the other hand, the intensity of the magnetic field Ma of the electromagnet 4b varies for a preset period so that the output voltage of the Hall element 4a varies, as shown in Fig. 12(b), in response to the variation of the magnetic field Ma. Letter T2 designates a period for the output voltage of the Hall element 4a to vary, that is, a period for the magnetic field Ma of the electromagnet 4b to vary. The period for the variation of the electric current Ia to be fed from the IC detection unit 4c to the electromagnet 4b is so adjusted that the period T2 of the variation of the magnetic field Ma of the electromagnet 4b may always be shorter than the information reading period T1 of the magnetic heads 17 and 18.

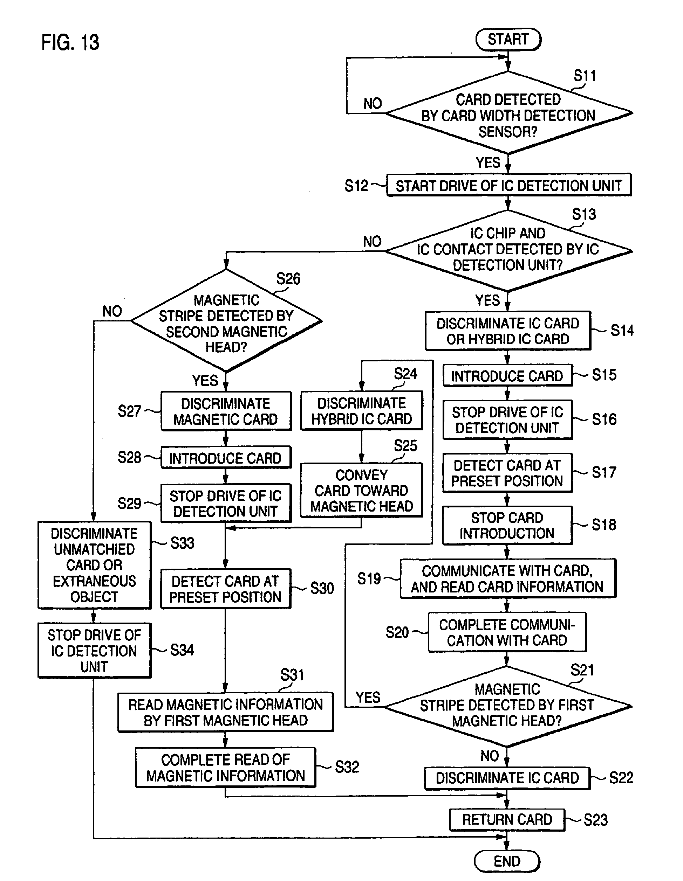

Fig. 13 is a flow chart showing an operation routine of the aforementioned IC card reader 102. The individual operations are executed by the control unit 11 (specifically, by the CPU belonging to the control unit 11). When an object having the card width W2 is inserted from the insert slot 1b into the passage 1c, as shown in Fig. 13, the card width detection sensor 3 detects that object so that it is switched from the OFF state to the ON state thereby to output the signal to the control unit 11. As a result, the control unit 11 decides that the card width detection sensor 3 has detected the insertion of the card (Step S11: YES). Then, the control unit 11 starts the drive of the IC detection unit 4c (at Step S12) to feed the Hall element 4a with the voltage outputting current and the electromagnet 4b with the magnetic field generating current. If the inserted object is the IC card 21 or the hybrid IC card 22, the magnetic field Ma generated by the electromagnet 4b is disturbed by the IC chip 21z or 22z or the IC contact 21a or 22a, thereby to lower the level of the output voltage of the Hall element 4a. Therefore, the IC detection unit 4c detects the presence of the IC chip or the IC contact, and outputs the IC detection signal indicating the detection result to the control unit 11. As a result, the control unit 11 decides that the IC detection unit 4c has detected the IC chip or the IC contact (Step S13: YES), and discriminates (at Step S14) that the inserted object is the IC card 21 or the hybrid IC card 22.

With this discrimination, the control unit 11 opens the shutter 5 and starts the forward drive of the motor 15 so that it conveys the inserted IC card 21 or 22 with the rollers 6 and introduces the same into the body inside 1a (at Step S15). At this time, moreover, the control unit 11 stops the drive of the IC detection unit 4c (at Step S16) to stop the feeds of the electric current to the Hall element 4a and the electromagnet 4b. When the card position detection sensor 7a does not detect the IC card 21 or 22 so that it takes the OFF state and when the card position detection sensors 7b and 7c detect the IC card 21 or 22 so that they take the ON state, the control unit 11 decides (at Step S17) that the IC card 21 or 22 has been detected at a preset position. When a preset time period then elapses, the control unit 11 stops the drive of the motor 15 thereby to stop the introduction of the IC card 21 or 22 (at Step S18). At this time, the IC card 21 or 22 stops at such a position that the IC contact 8 on the side of the card reader 102 can contact with the IC contact 21a or 22a. The control unit 11 brings the IC contact 8, when it stops the introduction of the IC card 21 or 22, into contact with the IC contact 21a or 22a on the side of the IC card 21 or 22 so that it causes the communication unit 13 to communicate with the IC card 21 or 22 thereby to read the information from the IC chip 21z or 22z (at Step S19). Then, the control unit 11 sends the read information to the host device 30 by the communication unit 16. When the control unit 11 receives such a notice from the host device 30 as indicates that the read information has been processed, it completes the communication with the IC card 21 or 22 (at Step S20).

The control unit 11 decides (at Step S21), when it completes the communication with the IC card 21 or 22, whether or not the information reading operation is necessary for the magnetic stripe. If the inserted card is the IC card 21 having no magnetic stripe, the second magnetic head 18 (Fig. 8) does not read the magnetic information at the insertion time of the card so that the drive unit 10 (Fig. 11) does not send the magnetic information to the control unit 11. Because of the absence of the magnetic strip in the card, therefore, the control unit 11 decides that the information reading operation is unnecessary for the magnetic stripe (Step S21: NO). With this decision, the control unit 11 discriminates (at Step S22) that the inserted card is the IC card 21, and brings the IC contact 8 from the IC contact 21a. After this, the control unit 11 starts the backward drive of the motor 15 thereby to convey the IC card 21 by the rollers 6 and return it to the insert slot 1b (at Step S23). When the IC card 21 is then extracted from the insert slot 1b, the control unit 11 closes the shutter 5, and stops the drive of the motor 15 thereby to end the routine.

If the inserted card is the hybrid IC card 22 having the magnetic stripe 22s, on the contrary, the second magnetic head 18 reads the magnetic information of the magnetic stripe 22s at the insertion time of the card, and the drive unit 10 sends that magnetic information control unit 11. As a result, the control unit 11 decides at Step S21 (Step S21: YES) that the information reading operation is necessary for the magnetic stripe because the card has the magnetic stripe. With this decision, the control unit 11 discriminates (at Step S24) that the inserted card is the hybrid IC card 22. After the IC contact 8 was brought away from the IC contact 22a, the forward drive of the motor 15 is started to convey the IC card 22 by the rollers 6 in the F-direction toward the first magnetic head 17 (Fig. 8) (at Step S25). When the card position detection sensor 7d (Fig. 8) detects the IC card 22 and takes the ON state, moreover, the control unit 11 detects the IC card 22 (at Step S30) at such a preset position that the first magnetic head 17 can read the magnetic information, and reads the magnetic information (at Step S31) from the magnetic stripe 22s of the IC card 22 by the first magnetic head 17. When the card position detection sensor 7e (Fig. 8) then detects the IC card 22 and takes the ON state, the control unit 11 stops the drive of the motor 15 thereby to stop the conveyance of the IC card 22 and to complete the read of the magnetic information of the magnetic stripe 22s by the first magnetic head 17 (at Step S32). Then, the control unit 11 sends the read information to the host device 30 by the communication unit 16. After this, the control unit 11 starts, when it receives the notice that the operation has been completed for the information read from the host device 30, the backward drive of the motor 15 so that the IC card 22 is conveyed by the rollers 6 and returned to the insert slot 1b (at Step S23). When the IC card 22 is then extracted from the insert slot 1b, the control unit 11 closes the shutter 5 and stops the drive the motor 15 thereby to end the routine.

In case such a card or extraneous object, e. g. , a magnetic card other than the IC card 21 or 22 as has the card width W2 is inserted from the insert slot 1b, moreover, the card width detection sensor 3 outputs the switching signal from the OFF state to the ON state, as described above. Therefore, the control unit 11 decides that the card width detection sensor 3 has detected the insertion of the card (Step S11: YES) . Since the aforementioned card or extraneous object is not provided with the IC chip or the IC contact, however, the magnetic field Ma of the electromagnet 4b is not disturbed so much as that at the insertion time of the IC card 21 or 22 so that the level of the output voltage of the Hall element 4a does not vary. If the inserted object is the magnetic card, it is provided with the magnetic stripe of the magnetic material. However, the electromagnet 4b is disposed at the aforementioned position where the magnetic stripe does not come into the magnetic field Ma generated. Therefore, the magnetic field Ma of the electromagnet 4b is not disturbed so much even by the magnetic stripe as that at the insertion time of the IC card 21 or 22 so that the level of the output voltage of the Hall element 4a does not vary. As a result, the IC detection unit 4c detects the absence of the IC chip or the IC contact so that it does not output the aforementioned IC detection signal to the control unit 11. Therefore, the control unit 11 decides that the IC detection unit 4c has not detected the IC chip or the IC contact (Step S13: NO). If the inserted object is the magnetic card, on the other hand, the second magnetic head 18 reads the magnetic information from the magnetic stripe of the magnetic card, and the drive unit 10 sends the magnetic information to the control unit 11. Therefore, the control unit 11 decides that the second magnetic head 18 has detected the magnetic stripe (Step S26: YES), and discriminates (at Step S27) that the inserted object is the magnetic card. With this discrimination, the control unit 11 opens the shutter 5 and starts the forward drive of the motor 15 thereby to convey the inserted magnetic card by the rollers 6 and introduce the card into the body inside 1a (at Step S28). At this time, moreover, the control unit 11 stops the drive of the IC detection unit 4c (at Step S29) thereby to stop the feed of the electric current to the Hall element 4a and the electromagnet 4b. After this, the control unit 11 reads (at Step S31 ), if it detects the magnetic card at the preset position (at Step S30), the magnetic information from the magnetic stripe by the first magnetic head 17. When the magnetic information is completely read (at Step S32), the control unit 11 sends the read information to the host device 30. Moreover, the control unit 11 returns (at Step S23), if it receives the notice indicating the completion of the operation on the information read from the host device 30, the magnetic card to the insert slot 1b (at Step S23). When the magnetic card is then extracted from the insert slot 1b, the control unit 11 closes the shutter 5 and stops the drive of the motor 15 thereby to end the routine.

If the inserted object is a card or extraneous object other than the card 21 or 22 and the magnetic card, on the contrary, the second magnetic head 18 neither reads the magnetic information from the inserted object, and the drive unit 10 does not send the magnetic information either to the control unit 11. Therefore, the control unit 11 decides that the second magnetic head 18 has not detected the magnetic stripe (Step S26: NO), and discriminates (at Step S33) that the inserted object is the unmatched card or the extraneous object. Then, the control unit 11 stops the drive of the IC detection unit 4c (at Step S34) thereby to stop the feed of the electric current to the Hall element 4a and the electromagnet 4b, and ends the routine without opening the shutter 5.

In the second embodiment thus far described, in case the IC card 21 or the hybrid IC card 22 is inserted from the insert slot 1b, the magnetic field Ma generated by the electromagnet 4b is disturbed by the IC chip 21z or 22z or the IC contact 21a or 22a containing the magnetic material, so that the output voltage of the Hall element 4a becomes lower than that before the insertion. As a result, the presence of the IC chip 21z or 22z or the IC contact 21a or 22a can be detected by the IC detection unit 4c. In case a magnetic card or extraneous object other than the IC card 21 or the hybrid IC card 22 is inserted from the insert slot 1b, on the other hand, the magnetic field Ma generated by the electromagnet 4b is not disturbed so such as that at the insertion time of the IC card 21 or 22 so that the output voltage of the Hall element 4a does not vary. As a result, the absence of the IC chip 21z or 22z or the IC contact 21a or 22a can be detected by the IC detection unit 4c. Since the presence of the IC chip 21z or 22z or the IC contact 21a or 22a can be detected, as described above, it is possible to discriminate that the inserted object is the IC card 21 or 22. Since the absence of the IC chip 21z or 22z or the IC contact 21a or 22a can be detected, on the other hand, it is possible to discriminate that the inserted object is not the IC card 21 or 22.

In response to the detection of the object having the card width W2 by the card width detection sensor 3, moreover, the IC detection unit 4c is driven to generate the magnetic field Ma from the electromagnet 4b so that a voltage according to the magnetic field Ma may be outputted from the Hall element 4a. Before the card is inserted from the insert slot 1b, therefore, the magnetic field generating current is not fed to the electromagnet 4b, and the voltage outputting current is not fed to the Hall element 4a, so that the power consumption can be suppressed at a low value. Moreover, the electromagnet 4b is disposed at the position, in which the magnetic field Ma generated exerts no influence on the magnetic heads 17 and 18, and the variation period T2 of the magnetic field Ma of the electromagnet 4b is shorter than the information reading period T1 of the magnetic heads 17 and 18. Therefore, the magnetic heads 17 and 18 can be prevented from being erroneously operated by the magnetic field Ma of the electromagnet 4b so that the information can be precisely read from the magnetic stripe of the IC card 22 or the magnetic card.

Moreover, each of the Hall element 4a and the electromagnet 4b is disposed such that the nonmagnetic material is interposed between itself and the passage 1c. As a result, the Hall element 4a and the electromagnet 4b are not exposed to the passage 1c so that they do not contact with the card or the like inserted from the insert slot 1b Therefore, the Hall element 4a and the electromagnet 4b are neither damaged nor soiled with dirt or the like. As a result, it is possible to detect the presence/absence of the IC chip 21z or 22z and the IC contact 21a or 22a of the IC card 21 or 22 stably for a long time by the Hall element 4a and the electromagnet 4b. In case the Hall element 4a is sealed with a package, no damage occurs even if the nonmagnetic material is not interposed between the Hall element 4a and the passage 1c.

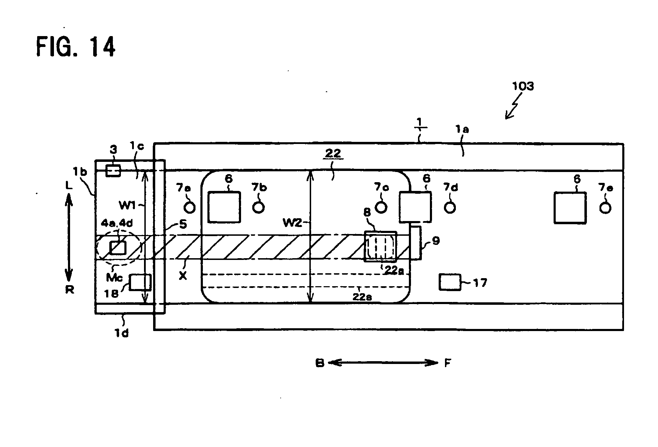

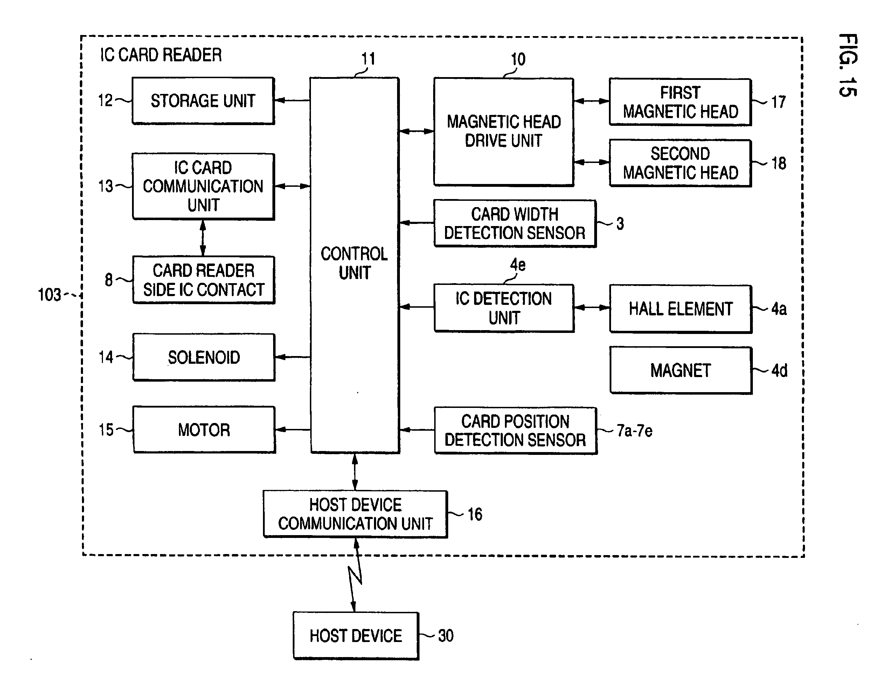

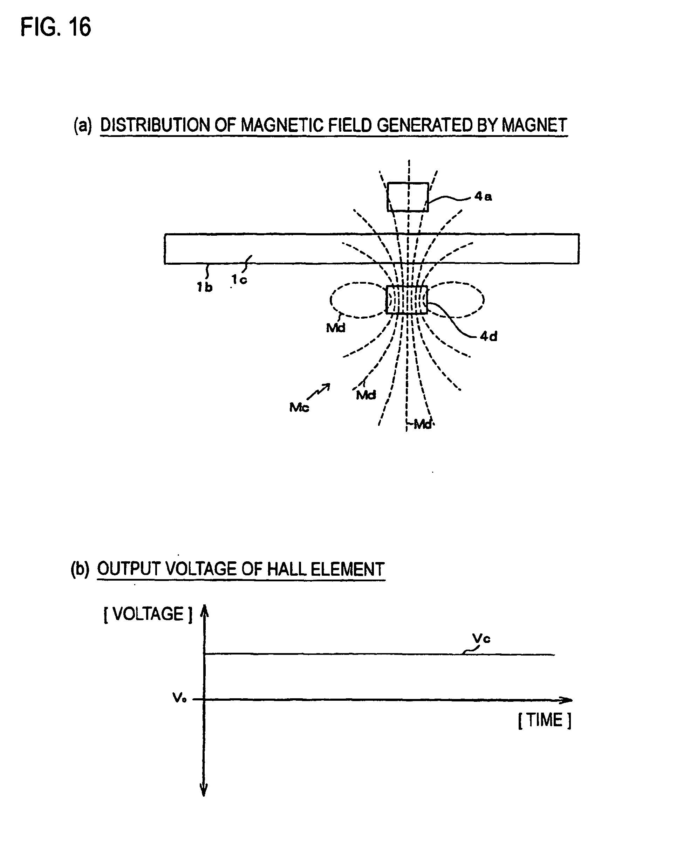

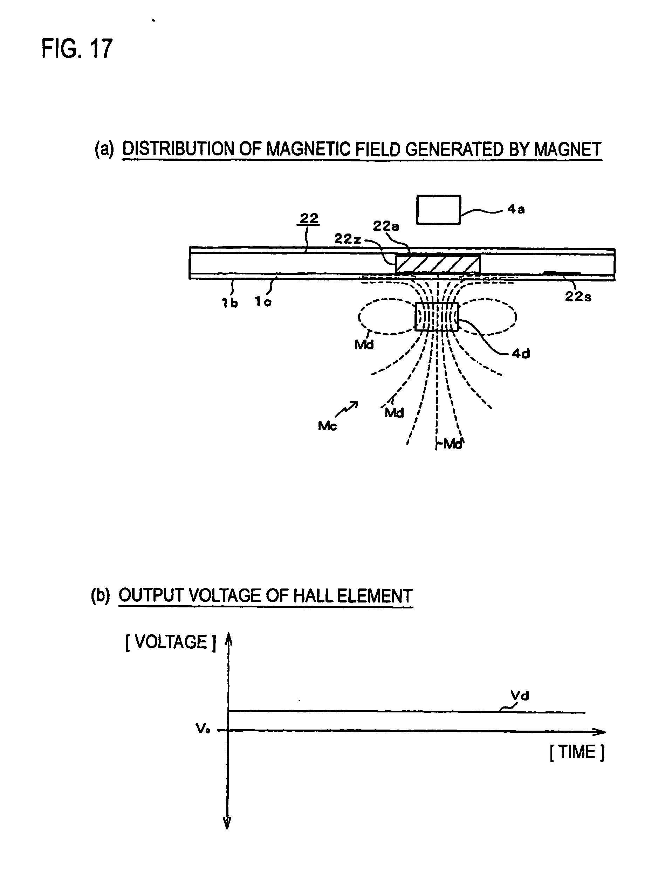

Fig. 14 to Fig. 17 are diagrams showing a third embodiment of the invention. Here in Fig. 14 and Fig. 15, the same portions as the aforementioned ones of Fig. 9 and Fig. 11 are designated by the common reference numerals. In Fig. 16 and Fig. 17, moreover, the same portions as the aforementioned ones of Fig. 5 and Fig. 6 are designated by the common reference numerals. An IC card reader 103 according to this embodiment is a composite type IC card reader for processing the aforementioned contact type IC card 21, the magnetic card, and the hybrid IC card 22 like the IC card reader 102 of the second embodiment. Therefore, the structure and configuration of the IC card reader 103 is substantially similar to those of the IC card reader 102. In the IC card reader 103, however, a magnet (or a permanent magnet) 4d shown in Fig. 14 is used as magnetic field generating means. This magnet 4d is disposed at the same position as that of the electromagnet 4b shown in Fig. 8 to Fig. 10, and always generates a magnetic field (i.e., a standing magnetic field) Mc having no time variability in the passage 1c. Here, neither the magnetic heads 17 and 18 and the magnetic stripe 22s of the IC card 22 do not enter the magnetic field Mc of the magnet 4d.

Fig. 15 is a block diagram showing an electric configuration of the aforementioned IC card reader 103. In Fig. 15, numeral 4e designates an IC detection unit including a circuit for activating the Hall element 4a. When this IC detection unit 4e feeds the Hall element 4a with an electric current at a preset value, the Hall element 4a outputs a voltage according to the magnetic field Mc generated by the magnet 4d.

Fig. 16 and Fig. 17 are diagrams for explaining the actions of the aforementioned Hall element 4a and magnet 4d. In Fig. 16, the magnet 4d is always generating the magnetic field Mc having no variability in intensity with time around itself, as shown in Fig. 16(a). (Letters Md designate a magnetic flux.) The aforementioned IC detection unit 4e always feeds the Hall element 4a with the electric current at the preset value so that the Hall element 4a outputs a constant voltage Vc having no variability, as shown in Fig. 16(b), to the IC detection unit 4e in accordance with the magnetic field Mc generated by the magnet 4d. (Letters V₀ designate an arbitrary bias voltage value.)

With the magnetic field Mc being generated by the magnet 4d, as described hereinbefore, the hybrid IC card 22 is inserted in the normal position from the insert slot 1b into the passage 1c, as shown in Fig. 17 (a) . Since this IC card 22 is provided with the IC chip 22z or the IC contact 22a containing a magnetic material such as a metal, the magnetic flux Md of the magnet 4d is then shielded by the IC chip 22z, for example, so that the magnetic field Mc is disturbed. As a result, the Hall element 4a outputs such a constant voltage Vd to the IC detection unit 4e as has a lower level than the output voltage Vc before the insertion of the IC card 22, as shown in Fig. 17(b). In case the aforementioned IC card 21 (of Fig. 6(a), for example) is inserted from the insert slot 1b, too, the Hall element 4a outputs the constant voltage Vd to the IC detection unit 4e as in the aforementioned case of the IC card 22. When the level of the output voltage of the Hall element 4a becomes lower, the IC detection unit 4e detects the presence of the IC chip 22z or the IC contact 22a, and outputs the IC detection signal indicating the detection result to the aforementioned control unit 11.

In case a magnetic card having neither the IC chip nor the IC contact other than the IC card 21 or 22 is inserted from the insert slot 1b into the passage 1c, on the other hand, the magnetic field Mc of the magnet 4d may be disturbed by the magnetic stripe of the magnetic card. Since the magnetic stripe is generally disposed at the end position apart from the position of the IC contact 22a or the IC chip 22z like the magnetic stripe 22s shown in Fig. 17(a), however, the degree of disturbance of the magnetic field Mc is far smaller than that at the insertion time of the IC card 21 or 22. Therefore, the output voltage of the Hall element 4a does not vary so much as the voltage Vd of Fig. 17(b) so that it is not so different from the output voltage Vc (Fig. 17(b)) before the card insertion. If the output voltage of the Hall element 4a does not thus vary so much as that at the insertion time of the IC card 21 or 22, the IC detection unit 4e detects the absence of the IC chip 22z or the IC contact 22a, but does not output the aforementioned IC detection signal to the control unit 11. Here in case a magnet for generating a magnetic field of a low intensity is used as the magnet 4d, the magnetic field of the magnet is not disturbed in the least by the magnetic stripe, and the magnetic information of the magnetic stripe is not influenced in the least by the magnetic field of the magnet. Meanwhile, the disturbance of the magnetic field by the IC chip 22z or the IC contact 22a is reduced to reduce the variation in the output voltage of the Hall element 4a. In this case, therefore, the variation in the output voltage of the Hall element 4a can be increased to detect the presence of the IC chip 22z or the IC contact 22a with the IC detection unit 4e either by increasing the current value to be fed from the IC detection unit 4e to the Hall element 4a or by amplifying the output voltage of the Hall element 4a with an amplifier circuit or the like.

In case a card or extraneous object having none of the IC chip, the IC contact and the magnetic stripe is inserted from the insert slot 1b into the passage 1c, the magnetic flux Md of the magnet 4d is not shielded so much as that at the insertion time of the IC card 21 or 22 so that the magnetic field Mc is not disturbed. Therefore, the output voltage of the Hall element 4a is not substantially different from the output voltage Va before the insertion. As a result, the IC detection unit 4e detects the absence of the IC chip 22z or the IC contact 22a so that it does not output the aforementioned IC detection signal to the control unit 11.

The operation routine of the IC card reader 103 thus far described is similar to that described with reference to Fig. 13 so that its description is omitted. However, the IC card reader 103 uses the magnet 4d as the magnetic field generating means. At Step S12 of Fig. 13, the drive of the IC detection unit 4e is started to feed only the Hall element 4a with the voltage outputting current. At Step S16 or Step S29, on the other hand, the drive of the IC detection unit 4e is stopped to stop the feed of the electric current to the Hall element 4a.

In the third embodiment thus far described, in case the IC card 21 or the hybrid IC card 22 is inserted from the insert slot 1b, the magnetic field Mc generated by the magnet 4d is disturbed by the IC chip 21z or 22z or the IC contact 21a or 22a containing the magnetic material, so that the output voltage of the Hall element 4a becomes is lower than that before the insertion. Therefore, the presence of the IC chip 21z or 22z or the IC contact 21a or 22a can be detected by the IC detection unit 4e. In case a magnetic card or extraneous object other than the IC card 21 or 22 is inserted from the insert slot 1b, on the other hand, the magnetic field Mc generated by the magnet 4d is not disturbed so much as that at the insertion time of the IC card 21 or 22 so that the output voltage of the Hall element 4a does not vary. Therefore, the absence of the IC chip 21z or 22z or the IC contact 21a or 22a can be detected by the IC detection unit 4e. Therefore, the presence of the IC chip 21z or 22z or the IC contact 21 a or 22a can be detected, as described above. This makes it possible to discriminate that the inserted object is the IC card 21 or 22. Moreover, the absence of the IC chip 21z or 22z or the IC contact 21a or 22a can be detected to discriminate that the inserted object is not the IC card 21 or 22.

As described above, the magnet 4d made of the permanent magnet is used as the magnetic field generating means. Since the magnetic field Mc of the magnet 4d is standing, the magnetic heads 17 and 18 are not erroneously operated by the magnetic field Mc of the magnet 4d even if the magnetic heads 17 and 18 are arranged close to the magnet 4d for the designing conveniences, for example.

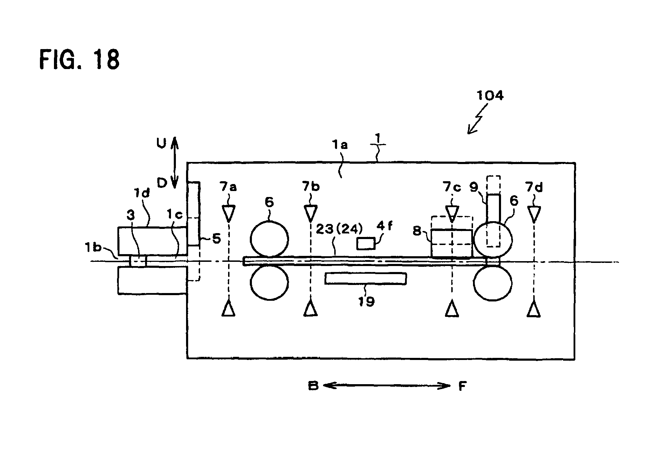

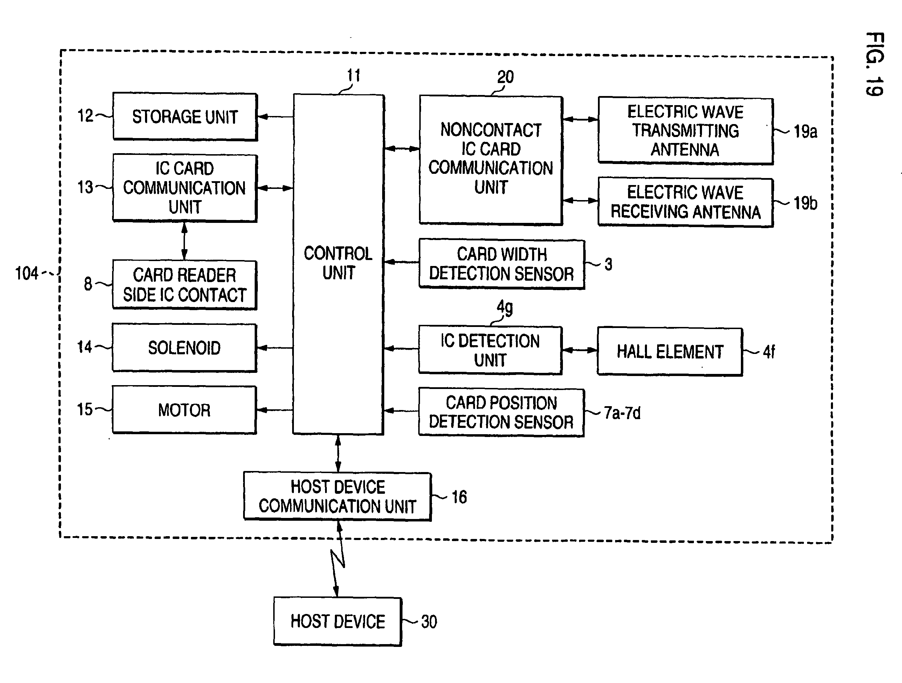

Fig. 18 to Fig. 20 are diagrams showing a fourth embodiment of the invention. Here in Fig. 18 to Fig. 19, the same portions as the aforementioned ones of Fig. 1 to Fig. 4 are designated by the common reference numerals. An IC card reader 104 according to this embodiment is a composite type IC card reader for processing the aforementioned contact type IC card 21 (as exemplified in Fig. 2) provided with the IC chip 21z and the IC contact 21a, a noncontact type IC card 23 (as shown in Fig. 15) provided with an IC chip (although not shown) and a coil (although not shown) for noncontact communications, and a hybrid IC card 24 (as shown in Fig. 15) provided with a noncontact type IC chip and a coil in addition to contact type IC chip and IC contact. Here, the IC chips belonging to the IC cards 23 and 24 contain a magnetic material such as a metal like the IC chip 21z of the IC card 21. Moreover, the coils belonging to the IC cards 23 and 24 also contain a magnetic material of a metal such as copper. In Fig. 18, numeral 19 designates an antenna for communicating with the noncontact IC chip to read the information. This antenna 19 is composed of a signal transmitting coil 19a and a signal receiving coil 19b, as shown in Fig. 19. The antenna 19 is disposed at a position to confront the back of the IC card 23 or 24 inserted in the normal position from the insert slot 1b and introduced into the body inside 1a and in the vicinity of the range, through which the noncontact IC chip of the IC card 23 or 24 passes. Numeral 4f designates a Hall element to confront the antenna 19. This Hall element 4f is disposed at a position to confront the surface of the IC card 23 or 24 inserted in the normal position from the insert slot 1b and introduced into the body inside 1a and in the vicinity of the range, through which the noncontact IC chip of the IC card 24 passes or the range, through which the contact IC chip or the IC contact passes.

Fig. 19 is a block diagram showing an electric configuration of the aforementioned IC card reader 104. In Fig. 19, numeral 20 designates a noncontact IC card communication unit including circuits for individually driving the transmission coil 19a and the reception coil 19b composing the aforementioned antenna 19. This communication unit 20 generates a magnetic field from the transmission coil 19a by feeding this coil 19a with an electric current at a preset value, and transmits a signal to the noncontact IC chip of the IC card 23 or 24. Moreover, the communication unit 20 receives the signal which is transmitted from the noncontact IC chip of the IC card 23 or 24 by the reception coil 19b. Numeral 4g designates an IC detection unit including a circuit for activating the aforementioned Hall element 4f. When this IC detection unit 4g feeds the Hall element 4f with an electric current at a preset value, the Hall element 4f outputs a voltage according to the variation in the magnetic field generated by the transmission coil 19a. In this embodiment, the transmission coil 19a constitutes the magnetic field generating means.

In the configuration of Fig. 19, the IC card 21, 23 or 24 is inserted from the insert slot 1b and introduced into the body inside 1a. Since the IC card 21, 23 or 24 is provided with the IC contact and the IC chip containing the magnetic material, the magnetic field to be generated by the transmission coil 19a is disturbed when those IC contact and IC chip are positioned over the transmission coil 19a, so that the output voltage of the Hall element 4f becomes lower than that before the insertion. Therefore, the IC detection unit 4g detects the presence of the IC chip or the IC contact, and outputs the IC detection signal indicating the detection result to the aforementioned control unit 11. In case a card or extraneous object having neither the IC chip nor the IC contact other than the IC card 21, 23 or 24 is inserted from the insert slot 1b and introduced into the body inside 1a, on the other hand, the magnetic field to be generated by the transmission coil 19a is not disturbed so much as that at the insertion time of the IC card 21, 23 or 24 so that the output voltage of the Hall element 4f does not vary so much as that at the insertion time of the IC card 21, 23 or 24. As a result, the IC detection unit 4g detects the absence of the IC chip or the IC contact so that it does not output the aforementioned IC detection signal to the control unit 11.

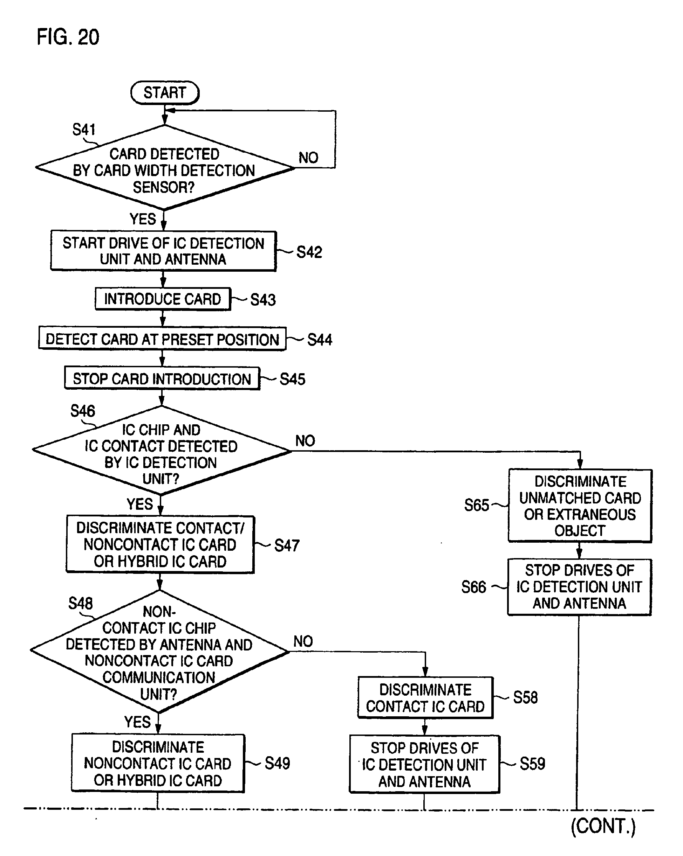

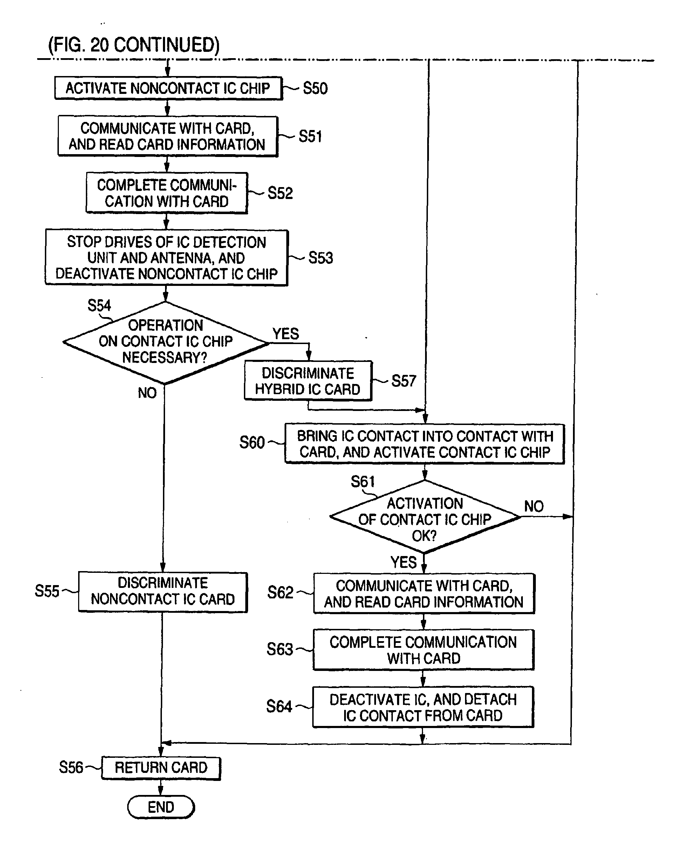

Fig. 20 is a flow chart showing an operation routine of the aforementioned IC card reader 104. The individual operations are executed by the control unit 11 (specifically, by the CPU belonging to the control unit 11). When an object having the card width W2 is inserted from the insert slot 1b into the passage 1c, as shown in Fig. 20, the card width detection sensor 3 detects that object so that it is switched from the OFF state to the ON state thereby to output the signal to the control unit 11. As a result, the control unit 11 decides that the card width detection sensor 3 has detected the insertion of the card (Step S41: YES). Then, the control unit 11 starts the drive of the aforementioned IC detection unit 4g to feed the Hall element 4f with the voltage outputting current, and starts the drive of the antenna 19 with the communication unit 20 to generate the magnetic field from the transmission coil 19a (at Step S42). Subsequently, the control unit 11 opens the shutter 5 and starts the forward drive of the motor 15 so that it conveys the inserted card with the rollers 6 and introduces the same into the body inside 1a (at Step S43). When the card position detection sensor 7a does not detect the card so that it takes the OFF state and when the card position detection sensors 7b and 7c detect the card so that they take the ON state, the control unit 11 decides (at Step S44) that the card has been detected at a preset position. When a preset time period then elapses, the control unit 11 stops the drive of the motor 15 thereby to stop the introduction of the card (at Step S45). At this time, the card stops at the position of the IC card 23 or 24 shown in Fig. 18.

If the object inserted from the insert slot 1b is the contact type IC card 21, the noncontact type IC card 23 or the hybrid IC card 24, the magnetic field of the transmission coil 19a is disturbed by the IC chip or the IC contact, as described hereinbefore, to lower the output voltage of the Hall element 4f when the IC card 21, 23 or 24 is introduced into the body inside 1a. Therefore, the IC detection unit 4g detects the presence of the IC chip or the IC contact, and outputs the aforementioned IC detection signal to the control unit 11. As a result, the control unit 11 decides that the IC detection unit 4g has detected the IC chip or the IC contact (Step S46: YES), and discriminates (at Step S47) that the inserted object is any of the contact type IC card 21, the noncontact type IC card 23 and the hybrid IC card 24. If the inserted object is the noncontact type IC card 23 or the hybrid IC card 24, on the other hand, an electric current flows through the coil belonging to the IC card 23 or 24 due to the electromagnetic induction in response to the magnetic field generated by the transmission coil 19a when this IC card 23 or 24 is introduced into the body inside 1a. As a result, a magnetic field is generated by the coil of the IC card 23 or 24 so that the magnetic field generated by the transmission coil 19a is disturbed. When the disturbance of the magnetic field of the transmission coil 19a at this time is detected by the reception coil 19b and the communication unit 20, the control unit 11 decides that the noncontact IC chip has been detected (Step S48: YES), and discriminates (at Step S49) that the inserted object is the noncontact type IC card 23 or the hybrid IC card 24.

With these discriminations, the control unit 11 transmits the signal from the transmission coil 19a to the IC card 23 or 24 through the communication unit 20 thereby to activate the noncontact IC chip of the IC card 23 or 24 into a communicative state. The noncontact IC chip transmits, if activated, the signal to the IC card reader 104 with the coil but not, if left inactive. Unless the signal is received from the noncontact IC chip by the reception coil 19b and the communication unit 20 until a preset time period elapses, the control unit 11 decides that the noncontact IC chip could not be activated (Step S50: NO). With this decision, the control unit 11 cannot read the information from the noncontact IC chip of the IC card 23 or 24. Therefore, the control unit 11 starts the backward drive of the motor 15 to convey the IC card 23 or 24 by the rollers 6 thereby to return the card to the insert slot 1b (at Step S56). When the IC card 23 or 24 is then extracted from the insert slot 1b, the control unit 11 closes the shutter 5 and stops the drive of the motor 15 thereby to end the routine.

When the signal is received from the noncontact IC chip by the reception coil 19b and the communication unit 20 till a preset time elapses after the activation of the noncontact IC chip of the IC card 23 or 24 was tried, on the contrary, the control unit 11 decides that the noncontact IC chip could be activated (Step S50: YES). With this decision, the control unit 11 communicates with the IC card 23 or 24 through the communication unit 20 and the coil 19a and 19b thereby to read the information from the noncontact IC chip (at Step S51). The control unit 11 once stores the storage unit 12 (Fig. 19) with the read information, and then sends the information to the host device 30 through the communication unit 16. When the control unit 11 then receives such a notice from the host device 30 as indicates that the operation on the information read from the host device 30 has been completed, the control unit 11 transmits the signal informing the end of communication to the IC card 23 or 24 through the communication unit 20 and the transmission coil 19a, thereby to deactivate the noncontact IC chip of the IC card 23 or 24, and completes the communication with the IC card 23 or 24 (at Step S52). Then, the control unit 11 stops the drive of the IC detection unit 4g and accordingly the feed of the electric current to the Hall element 4f, and stops the drive of the antenna 19 and accordingly the magnetic field generation from the transmission coil 19a (at Step S53). Subsequently, the control unit 11 decides (at Step S54) whether or not the information reading operation on the contact IC chip is necessary. If the inserted object is the noncontact type IC card 23 lacking the contact IC chip, the information read from the noncontact IC chip does not contain the information indicating the presence of the contact IC chip. By reading the information read from the noncontact IC chip out of the storage unit 12, therefore, the control unit 11 decides that the operation to read the information from the contact IC chip is unnecessary (Step S54: NO), because the card lacks the contact IC chip. Here, the control unit 11 may also decide that the information reading operation on the contact IC chip is unnecessary, by receiving such an instruction from the host device 30 that the reading operation need not be executed because the card lacks the contact IC chip or that the reading operation need not be executed because the information need not be read from the contact IC chip belonging to the card. If the control unit 11 decides that the information reading operation is unnecessary, the control unit 11 discriminates (at Step S55) that the inserted card is the noncontact type IC card 23, and starts the backward drive of the motor 15 thereby to convey the IC card 23 by the rollers 6 and return the card to the insert slot 1b (at Step S56). When the IC card 23 is then extracted from the insert slot 1b, the control unit 11 closes the shutter 5 and stops the drive the motor 15 thereby to end the routine.

If the inserted object is the hybrid IC card 24 having the contact IC chip, on the contrary, the information read from the noncontact IC chip contains the information indicating the presence of the contact IC chip. By reading the information read from the noncontact IC chip out of the storage unit 12, therefore, the control unit 11 decides that the information reading operation on the contact IC chip is necessary (Step S54: YES) because the card has the contact IC chip. By receiving such an instruction from the host device 30 that the reading operation should be executed because the card has the contact IC chip, as described above, the control unit 11 may also decide that the information reading operation on the contact IC chip is necessary. If the control unit 11 decides that the information reading operation is necessary, the control unit 11 discriminates (at Step S57) that the inserted card is the hybrid IC card 24, and brings the IC contact 8 into the IC contact of the IC card 24 (at Step S60). Then, the control unit 11 energizes the IC contact of the IC card 24 from the IC contact 8 thereby to activate the contact IC chip of the IC card 24. When this contact IC chip is activated, the signal is transmitted from the contact IC chip to the IC card reader 104. When this signal is received by the IC contact 8 and the communication unit 13, the control unit 11 decides that the contact IC chip could be activated (Step S61: YES). With this decision, the control unit 11 communicates with the IC card 24 through the IC contact 8 and the communication unit 13 thereby to read the information from the contact IC chip (at Step S62), and sends the read information to the host device 30 through the communication unit 16. When the control unit 11 is then noticed of it from the host device 30 that the operation on the read information has been completed, the control unit 11 transmits the signal noticing the end of the communication to the IC card 24 through the communication unit 13 and the IC contact 8. After this, the control unit 11 stops the energization from the IC contact 8 to deactivate the contact IC chip of the IC card 24, and completes the communication with the IC card 24 (at Step S63). Then, the control unit 11 detaches the IC contact 8 from the IC contact of the IC card 24 (at Step S64), and starts the backward drive of the motor 15 thereby to convey the IC card 24 by the rollers 6 and return the card to the insert slot 1b (at Step S56). When the IC card 24 is then extracted from the insert slot 1b, the control unit 11 closes the shutter 5 and stops the drive of the motor 15 thereby to end the routine.

Unless the control unit 11 receives the signal from the contact IC chip through the IC contact 8 and the communication unit 13 until a preset time period elapses after the activation of the contact IC chip of the IC card 24 was activated, the control unit 11 decides that the contact IC chip cannot have been activated (Step S61: NO) . With this decision, the control unit 11 cannot read the information from the contact IC chip of the IC card 24 so that it starts the backward drive of the motor 15 thereby to convey the IC card 24 by the rollers 6 and return the card to the insert slot 1b (at Step S56). When the IC card 24 is then extracted from the insert slot 1b, the control unit 11 closes the shutter 5 and stops the drive of the motor 15 thereby to end the routine.

If the inserted object is the contact type IC card 21, on the other hand, it is not provided with the coil. Even if the IC card 21 is introduced into the body inside 1a, therefore, the magnetic field to be generated by the transmission coil 19a is not disturbed unlike the case in which it has been influenced by the coil of the IC card 23 or 24. Therefore, the disturbance of the magnetic field of the transmission coil 19a cannot be detected by the reception coil 19b and the communication unit 20. Therefore, the control unit 11 decides at Step 48 that the noncontact IC chip has not been detected (Step S48: NO), and discriminates (at Step S58) that the inserted object is the contact type IC card 21. With this decision, the control unit 11 stops the drive of the IC detection unit 4g and accordingly the feed of the electric current to the Hall element 4f, and stops the drive of the antenna 19 and accordingly the magnetic field generation from the transmission coil 19a (at Step S59). Then, the control unit 11 executes the individual operations of Step S60 to Step S64 and the operation of Step S56 like the aforementioned routine. When the IC card 21 is extracted from the insert slot 1b after the IC card 21 was returned to the insert slot 1b at Step S56, the control unit 11 closes the shutter 5 and stops the drive of the motor 15 thereby to end the routine.

If the inserted object is a card or extraneous object having the card width W2 other than the IC card 21, 23 or 24, on the other hand, the object is not provided with the IC chip or the IC contact. As described hereinbefore, therefore, the magnetic field of the transmission coil 19a is not disturbed so much as that at the insertion time of the IC card 21, 23 or 24 so that the output voltage of the Hall element 4f does not vary. As a result, the IC detection unit 4g detects the absence of the IC chip or the IC contact so that it does not output the aforementioned IC detection signal to the control unit 11. As a result, the control unit 11 decides that the IC detection unit 4g has not detected the IC chip or the IC contact (Step S46: NO), and discriminates (at Step S65) that the inserted object is the unmatched card or the extraneous object. With this decision, the control unit 11 stops the drive of the IC detection unit 4g and accordingly the feed of the electric current to the Hall element 4f, and stops the drive of the antenna 19 and accordingly the magnetic field generation from the transmission coil 19a ( at Step S66 ) . Then, the control unit 11 returns the unmatched card or the extraneous object to the insert slot 1b (at Step S56). After this, the control unit 11 closes the shutter 5 and stops the drive of the motor 15 thereby to end the routine.

In the fourth embodiment thus far described, in case the contact type IC card 21, the noncontact type IC card 23 or the hybrid IC card 24 is inserted from the insert slot 1b, the magnetic field generated by the transmission coil 19a is disturbed by the IC chip or the IC contact containing the magnetic material so that the output voltage of the Hall element 4f becomes lower than that before the insertion. Therefore, the presence of the IC chip or the IC contact can be detected by the IC detection unit 4g. In case a card or extraneous object other than the IC card 21, 23 or 24 is inserted from the insert slot 1b, on the other hand, the magnetic field generated by the transmission coil 19a is not disturbed so much as that at the insertion time of the IC card 21, 23 or 24 so that the output voltage of the Hall element 4f does not vary. Therefore, the absence of the IC chip or the IC contact can be detected by the IC detection unit 4g. Since the presence of the IC chip or the IC contact can be detected, as described above, it can be discriminated that the inserted object is the IC card 21, 23 or 24. Since the absence of the IC chip or the IC contact can be detected, on the other hand, it can be discriminated that the inserted object is not the IC card 21, 23 or 24.

Since the transmission coil 19a for the noncontact communications is also used as the magnetic field generating means, as described above, the presence/absence of the IC card 21, 23 or 24 or the IC contact can be detected by the transmission coil 19a and the Hall element 4f without providing the aforementioned electromagnet 4b or magnet 4d. After the IC card 21, 23 or 24 was discriminated by detecting the presence of the IC chip or the IC contact in the inserted card, it is detected by the reception coil 19b and the communication unit 20 whether or not the IC card 21, 23 or 24 has the noncontact IC chip. Thus, it is possible to discriminate whether or not the card is the noncontact type IC card or the contact type IC card.

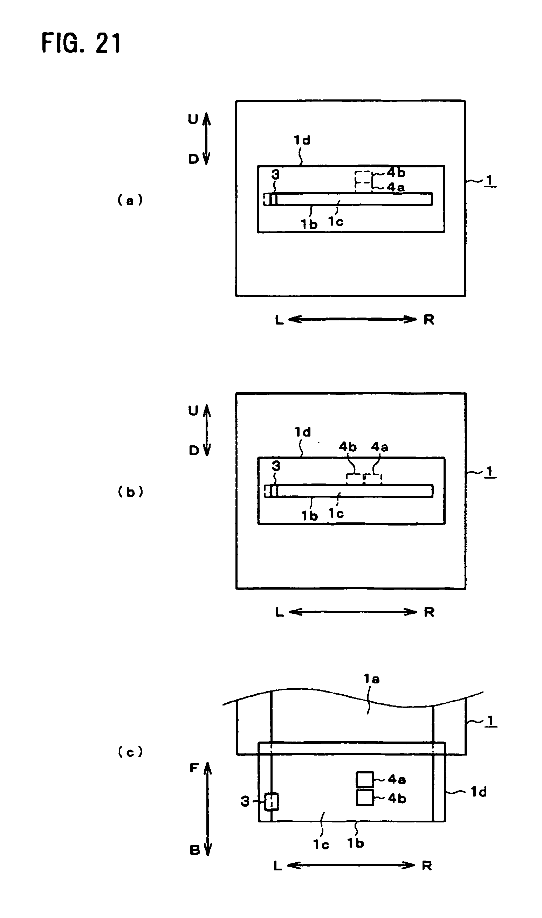

In the embodiments thus far described, there has been exemplified the case, in which the Hall element 4a or 4f is so disposed on the upper side of the passage 1c as to confront the surface of the card whereas the electromagnet 4b, the magnet 4d or the transmission coil 19a acting as the magnetic field generating means is so disposed on the lower side of the passage 1c as to confront the back of the card. However, the invention should not be limited to these dispositions. Alternatively, the Hall element 4a and the electromagnet 4b may also be juxtaposed in the upward and downward directions U and D on one side (or upper side) of the passage 1c, as shown in Fig. 21(a), in the leftward and rightward directions L and R on one side (or upper side) of the passage 1c, as shown in Fig. 21 (b) , or in the card inserting direction F on one side of the passage 1c, as shown in Fig. 21 (c) . Moreover, the Hall element 4a and the electromagnet 4b need not be arranged vertically or in parallel with respect to the passage 1c but may also be arranged obliquely with respect to the passage 1c. A similar discussion is applied to the case, in which the electromagnet 4b is replaced as the magnetic field generating means by the magnet 4d or the transmission coil 19a.

Moreover, the foregoing embodiment has been described on the case, in which the composite type IC card reader 103 for processing the contact type IC card and the magnetic card employs the magnet 4d for generating the standing magnetic field. However, the invention should not be limited to that embodiment but can be extended to the case, in which either the IC card reader 101 for processing only the contact type IC card or the composite type IC card reader 104 for processing the contact type IC card and the noncontact type IC card employs the magnet 4d for generating the standing magnetic field.

Moreover, the foregoing embodiments have been described on the case, in which the IC chip and the IC contact of the IC card can be detected by the Hall element and the magnetic field generating means, but the invention should not be limited to those embodiments. The invention can also be modified such that only the IC contact is exclusively detected by adjusting the intensity of the magnetic field of the magnetic field generating means or the amplification factor of the output voltage of the Hall element, or by setting a threshold value for the output voltage of the Hall element. Moreover, the IC chip may also be exclusively detected.

Still moreover, the foregoing embodiments have been described on the cases, in which the invention is applied to the IC card reader 101 dedicated to the contact type IC card, the IC card readers 102 and 103 for processing the hybrid IC card 22 having the IC contact and the magnetic stripe, and the IC card reader 104 for processing the hybrid IC card 24 having the contact IC chip and the noncontact IC chip. In addition, the invention can also be applied to a variety of IC card processing apparatus such as the IC card reader dedicated to the noncontact type IC card, the IC card reader for processing the hybrid IC card having the noncontact IC chip and the magnetic stripe, and the IC card reader for processing the hybrid IC card having the IC contact, the noncontact IC chip and the magnetic stripe.

According to the invention, in case the IC card is inserted, the magnetic field of the magnetic field generating means is disturbed by the IC chip or the IC contact containing the magnetic material, and the output voltage of the Hall element becomes lower, so that the presence of the IC chip or the IC contact can be detected. In case a card other than the IC card is inserted from the insert slot, on the other hand, the magnetic field generated by the magnetic field generating means is not disturbed so much as that at the insertion time of the IC card, so that the absence of the IC chip or the IC contact can be detected. From the result of the presence/absence of the IC chip or the IC contact, therefore, it is possible to discriminate whether or not the inserted object is the IC card.

## Claims

1. An IC card processing apparatus comprising:
an insert slot (1b);
read means (8) for reading the information which is recorded in an IC card (21) inserted from said insert slot (1b);
a shutter (5) interposed between said insert slot (1b) and said read means (8); and
detection means (4a, 4b, 4c) disposed at said insert slot (1b) for detecting the presence/absence of the IC card (21) on the basis of a variation in a magnetic field, said detection means (4a, 4b, 4c) includes magnetic field generating means (4b);
**characterized in that**
said detection means (4a, 4b, 4c) is arranged within a range (X) through which an IC contact (21a) and/or an IC chip (21z) of the IC card (21) inserted in a normal position is to pass;
said detection means (4a, 4b, 4c) is disposed at a position to confront the IC card (21) inserted in a normal position;
said detection means (4a, 4b, 4c) is adapted to detect the presence/absence of the IC contact (21a) and/or IC chip (21z) of the IC card (21) when an object is inserted from the insert slot (1b) ; and
said shutter (5) is opened on the basis of the fact that said detection means (4a, 4b, 4c) has detected the IC chip (21z, 22z) and/or the IC contact (21a, 22a) of the IC card (21) inserted in a normal position.

2. An IC card processing apparatus as set forth in Claim 1, **characterized:**
**in that** said insert slot (1b) is formed in an insert unit (1d) made of a material having no magnetic property; and
**in that** said magnetic field generating means (4b) is disposed in said insert unit (1d), and said magnetic field generating means (4b) is so disposed at a position to confront the card (21) inserted from the insert slot (1b) as to interpose said material having no magnetic property.

3. An IC card processing apparatus as set forth in Claim 2, **characterized:**
**in that** said magnetic field generating means (4b) is disposed at such a position that the generated magnetic field may exert no influence on a magnetic head (17, 18) for reading the information recorded in the magnetic stripe (22s) of a magnetic card (22).

4. An IC card processing apparatus as set forth in any of Claims 1 to 3, **characterized:**
**by** comprising width detecting means for detecting whether or not an object of a preset width has been inserted into the insert slot (1b); and
in that said detection means (4a, 4b, 4c) is activated responsively as said width detecting means (3) detects the insertion of an object of a preset width.

5. An IC card processing apparatus as set forth in any of Claims 1 to 4, **characterized:**
**in that** said insert slot (1b) is formed in an insert unit (1d) made of a material having no magnetic property;
**in that** said detection means (4a, 4b, 4c) includes said magnetic field generating means (4b) and a Hall element (4a), said magnetic field generating means (4b) and said Hall element (4a) is so disposed at a position to confront the IC contact (21a) and/or the IC chip (21z) of the IC card (21) inserted in a normal position from the insert slot (1b) as to interpose said material having no magnetic property; and
**in that** said Hall element (4a) is disposed at a position to confront one of the surface and the back of the card inserted from the insert slot (1b) whereas the magnetic field generating means (4b) is disposed at a position to confront the other.

6. An IC card processing apparatus as set forth in any of Claims 1 to 5, **characterized:**
**in that** the period for the magnetic field of said magnetic field generating means (4b) to vary is made shorter than the reading period of the magnetic head (17, 18) for reading the information recorded in a magnetic stripe (22s) of a magnetic card (22).

## Patentansprüche

1. IC-Karten-Bearbeitungsvorrichtung mit:
einem Einführungsschlitz (1b);
einem Lesemittel (8) zum Lesen der Information, die auf einer vom Einführungsschlitz (1b) aus eingeführten IC-Karte (21) aufgezeichnet ist;
einer Verschlussblende (5), die zwischen den Einführungsschlitz (1b) und das Lesemittel (8) eingefügt ist; und
einem an dem Einführungsschlitz (1b) angeordneten Erfassungsmittel (4a, 4b, 4c) zum Erfassen der Anwesenheit/Abwesenheit der IC-Karte (21) auf der Basis einer Veränderung eines Magnetfeld, wobei das Erfassungsmittel (4a, 4b, 4c) ein Magnetfeld-Erzeugungsmittel (4b) aufweist;
**dadurch gekennzeichnet, dass**
das Erfassungsmittel (4a, 4b, 4c) innerhalb eines Bereichs (X) angeordnet ist, den ein IC-Kontakt (21a) und/oder ein IC-Chip (21z) der in einer normalen Lage eingeführten IC-Karte (21) passieren soll;
das Erfassungsmittel (4a, 4b, 4c) an einer Stelle angeordnet ist, so dass es der in einer normalen Lage eingeführten IC-Karte (21) gegenübersteht;
das Erfassungsmittel (4a, 4b, 4c) dazu ausgelegt ist, die Anwesenheit/Abwesenheit des IC-Kontakts (21a) und/oder des IC-Chips (21z) der IC-Karte (21) zu erfassen, wenn ein Objekt vom Einführungsschlitz (1b) aus eingeführt wird; und
die Verschlussblende (5) auf der Basis der Tatsache, dass das Erfassungsmittel (4a, 4b, 4c) den IC-Chip (21z, 22z) und/oder den IC-Kontakt (21a, 22a) der in einer normalen Lage eingeführten IC-Karte (21) erfasst hat, geöffnet wird.

2. IC-Karten-Bearbeitungsvorrichtung nach Anspruch 1,
**dadurch gekennzeichnet, dass**:
der Einführungsschlitz (1b) in einer Einführungseinheit (1d) ausgebildet ist, die aus einem Material ohne magnetische Eigenschaft besteht; und
das Magnetfeld-Erzeugungsmittel (4b) in der Einführungseinheit (1d) angeordnet ist und das Magnetfeld-Erzeugungsmittel (4b) an einer Stelle so angeordnet ist, dass es der vom Einführungsschlitz (1b) aus eingeführten Karte (21) gegenübersteht, so dass das Material ohne magnetische Eigenschaft dazwischen eingefügt wird.

3. IC-Karten-Bearbeitungsvorrichtung nach Anspruch 2,
**dadurch gekennzeichnet, dass**:
das Magnetfeld-Erzeugungsmittel (4b) an einer solchen Stelle angeordnet ist, dass das erzeugte Magnetfeld keinen Einfluss auf einen Magnetkopf (17, 18) zum Lesen der auf dem Magnetstreifen (22s) einer Magnetkarte (22) aufgezeichneten Information ausüben kann.

4. IC-Karten-Bearbeitungsvorrichtung nach einem der Ansprüche 1 bis 3, **dadurch gekennzeichnet, dass**:
sie ein Breitenerfassungsmittel zum Erfassen, ob ein Objekt mit einer vorgegebenen Breite in den Einführungsschlitz (1b) eingeführt wurde oder nicht, aufweist; und
das Erfassungsmittel (4a, 4b, 4c) in Reaktion darauf aktiviert wird, dass das Breitenerfassungsmittel (3) die Einführung eines Objekts mit einer vorgegebenen Breite erfasst.

5. IC-Karten-Bearbeitungsvorrichtung nach einem der Ansprüche 1 bis 4, **dadurch gekennzeichnet, dass**:
der Einführungsschlitz (1b) in einer Einführungseinheit (1d) ausgebildet ist, die aus einem Material ohne magnetische Eigenschaft besteht;
das Erfassungsmittel (4a, 4b, 4c) das Magnetfeld-Erzeugungsmittel (4b) und ein Hall-Element (4a) aufweist, wobei das Magnetfeld-Erzeugungsmittel (4b) und das Hall-Element (4a) so an einer Stelle angeordnet sind, dass sie dem IC-Kontakt (21a) und/oder dem IC-Chip (21z) der vom Einführungsschlitz (1b) aus in einer normalen Lage eingeführten IC-Karte (21) gegenüberstehen, so dass das Material ohne magnetische Eigenschaft dazwischen eingefügt wird; und
das Hall-Element (4a) an einer Stelle so angeordnet ist, dass es der Oberseite oder der Rückseite der vom Einführungsschlitz (1b) aus eingeführten Karte gegenübersteht, wohingegen das Magnetfeld-Erzeugungsmittel (4b) an einer Stelle angeordnet ist, so dass es der anderen Seite gegenübersteht.

6. IC-Karten-Bearbeitungsvorrichtung nach einem der Ansprüche 1 bis 5, **dadurch gekennzeichnet, dass**:
die Periode, in der sich das Magnetfeld des Magnetfeld-Erzeugungsmittels (4b) ändern soll, kürzer gemacht ist als die Leseperiode des Magnetkopfs (17, 18) zum Lesen der auf einem Magnetstreifen (22s) einer Magnetkarte (22) aufgezeichneten Information.

## Revendications

1. Dispositif de traitement de carte à circuit intégré, comprenant :
une fente d'insertion (1b);
un moyen de lecture (8) pour lire les informations qui sont enregistrées dans une carte à circuit intégré (21) insérée à partir de ladite fente d'insertion (1b);
un volet (5) interposé entre ladite fente d'insertion (1b) et ledit moyen de lecture (8); et
un moyen de détection (4a, 4b, 4c) disposé au niveau de ladite fente d'insertion (1b) pour détecter la présence/l'absence de la carte à circuit intégré (21) sur la base d'une variation dans un champ magnétique, ledit moyen de détection (4a, 4b, 4c) comprend un moyen de génération de champ magnétique (4b);
**caractérisé en ce que**
ledit moyen de détection (4a, 4b, 4c) est disposé sur un parcours ou un domaine (X) sur ou dans lequel un contact à circuit intégré (21a) et/ou une puce à circuit intégré (21z) de la carte à circuit intégré (21) insérée dans une position normale passe ou passent;
ledit moyen de détection (4a, 4b, 4c) est disposé à une position pour faire face à la carte à circuit intégré (21) insérée dans une position normale;
ledit moyen de détection (4a, 4b, 4c) est adapté pour détecter la présence/l'absence du contact à circuit intégré (21a) et/ou de la puce à circuit intégré (21z) de la carte à circuit intégré (21) lorsqu'un objet est inséré depuis la fente d'insertion (1b); et
ledit volet (5) est ouvert sur la base du fait que ledit moyen de détection (4a, 4b, 4c) a détecté la puce à circuit intégré (21z, 22z) et/ou le contact à circuit intégré (21a, 22a) de la carte à circuit intégré (21) insérée dans une position normale.

2. Dispositif de traitement de carte à circuit intégré selon la revendication 1,
**caractérisé :**
**en ce que** ladite fente d'insertion (1b) est formée dans une unité d'insertion (1d) faite d'un matériau n'ayant aucune propriété magnétique, et
**en ce que** ledit moyen de génération de champ magnétique (4b) est disposé dans ladite unité d'insertion (1d), et ledit moyen de génération de champ magnétique (4b) est disposé à une position pour faire face à la carte (21) insérée depuis la fente d'insertion (1b) de façon à s'intercaler ou s'interposer dans ledit matériau n'ayant aucune propriété magnétique.

3. Dispositif de traitement de carte à circuit intégré selon la revendication 2,
**caractérisé :**
**en ce que** ledit moyen de génération de champ magnétique (4b) est disposé à une position telle que le champ magnétique généré ne peut exercer aucune influence sur une tête magnétique (17, 18) pour lire les informations enregistrées dans la bande magnétique (22s) d'une carte magnétique (22).

4. Dispositif de traitement de carte à circuit intégré selon l'une quelconque des revendications 1 à 3, **caractérisé :**
**par** le fait de comprendre un moyen de détection de largeur pour détecter si un objet d'une largeur préétablie a été inséré dans la fente d'insertion (1b) ou non; et
en ce que ledit moyen de détection (4a, 4b, 4c) est activé en réponse au fait que ledit moyen de détection de la largeur (3) détecte l'insertion d'un objet d'une largeur préétablie.

5. Dispositif de traitement de carte à circuit intégré selon l'une quelconque des revendications 1 à 4, **caractérisé :**
**en ce que** ladite fente d'insertion (1b) est formée dans une unité d'insertion (1d) faite d'un matériau n'ayant aucune propriété magnétique;
**en ce que** ledit moyen de détection (4a, 4b, 4c) comprend ledit moyen de génération de champ magnétique (4b) et un élément à effet Hall (4a), ledit moyen de génération de champ magnétique (4b) et ledit élément à effet Hall (4a) sont disposés à une position pour faire face au contact à circuit intégré (21a) et/ou à la puce à circuit intégré (21z) de la carte à circuit intégré (21) insérée dans une position normale depuis la fente d'insertion (1b) de manière à s'intercaler ou s'interposer dans ledit matériau n'ayant aucune propriété magnétique; et
**en ce que** ledit élément à effet Hall (4a) est disposé à une position pour faire face à une surface et à l'arrière de la carte insérée depuis la fente d'insertion (1b) alors que le moyen de génération de champ magnétique (4b) est disposé à une position pour faire face à l'autre.

6. Dispositif de traitement de carte à circuit intégré selon l'une quelconque des revendications 1 à 5, **caractérisé :**
**en ce que** l'intervalle de temps pour que le champ magnétique dudit moyen de génération de champ magnétique (4b) varie est rendu plus court que l'intervalle de temps de lecture de la tête magnétique (17, 18) pour lire les informations enregistrées dans une bande magnétique (22s) d'une carte magnétique (22).
